(19) Europäisches Patentamt

European Patent Office

Office européen des brevets

(11) **EP 4 542 280 A2**

(12) **EUROPEAN PATENT APPLICATION**

(43) Date of publication:
23.04.2025 Bulletin 2025/17

(21) Application number: 25161757.7

(22) Date of filing: 05.03.2025

(51) International Patent Classification (IPC):
*G02B 13/00* [(2006.01)]    *G02B 15/14* [(2006.01)]

(52) Cooperative Patent Classification (CPC):
G02B 15/143503; G02B 13/0045; G02B 13/009

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.03.2024  CN 202410270505

(71) Applicant: Jiangxi OFILM Optical Co., Ltd.
Nanchang, Jiangxi 330096 (CN)

(72) Inventor: LIU, Binbin
Shenzhen, 518106 (CN)

(74) Representative: Metida
Gyneju str. 16
01109 Vilnius (LT)

(54) **OPTICAL SYSTEM, CAMERA MODULE, AND ELECTRONIC DEVICE**

(57)    An optical system consists of eight lenses with refractive power. From an object side to an image side along an optical axis of the optical system, the eight lenses sequentially include a first lens, a second lens, a third lens, a fourth lens, a fifth lens, a sixth lens, a seventh lens, and an eighth lens. The first lens and the second lens form a first lens group with negative refractive power. The third lens to the fifth lens form a second lens group with positive refractive power. The sixth lens to the eighth lens form a third lens group having negative refractive power. The first lens group is fixed relative to an imaging plane of the optical system. Each of the second lens group and the third lens group can move along the optical axis between the first lens group and the imaging plane to realize zooming.

FIG. 1A

EP 4 542 280 A2

**Description**

FIELD

The subject matter relates to field of optical imaging, and more particularly, to an optical system, a camera module, and an electronic device.

BACKGROUND

With the development of technologies, especially optical systems technologies, optical systems are widely used in smart portable devices such as mobile phones and tablet computers, and consumers have increased requirements for focal length coverage in the optical systems. However, the imaging quality of existing optical systems with zooming capability is poor and cannot meet the increased requirements. How to improve the imaging quality of the optical system with zooming capability is thus problematic.

SUMMARY

The present disclosure discloses an optical system, a camera module, and an electronic device with zooming capability, being miniaturized, and with imaging quality are needed.

The present disclosure provides the following embodiments.

A first aspect of the present disclosure provides an optical system consisting of eight lenses with refractive power. From an object side to an image side along an optical axis of the optical system, the eight lenses sequentially include a first lens, a second lens, a third lens, a fourth lens, a fifth lens, a sixth lens, a seventh lens, and an eighth lens. The first lens and the second lens form a first lens group with negative refractive power. The third lens to the fifth lens form a second lens group with positive refractive power. The sixth lens to the eighth lens form a third lens group having negative refractive power. The first lens group is fixed relative to an imaging plane of the optical system. Each of the second lens group and the third lens group is configured to move along the optical axis between the first lens group and the imaging plane to realize zooming capability of the optical system. The optical system satisfies relationships of $1<fmax/fmin<2.1$, $-1.5<f12/fmax<-0.5$, $0.25<f345/fmax<0.8$, and $-1.1<f678/fmax<-0.3$. Wherein, fmax is a maximum focal length of the optical system, fmin is a minimum focal length of the optical system, f12 is a combined focal length of the first lens to the second lens, f345 is a combined focal length of the third lens to the fifth lens, and f678 is a combined focal length of the sixth lens to the eighth lens.

The present disclosure moves the second lens group and the third lens group between the first lens group and the imaging plane, thereby enabling the optical system to realize zooming capability. The total length of the optical system does not change during zooming. That is, the optical system has a fixed total length, which meets the miniaturization requirements of the optical system. The eight lenses with refractive power evenly distribute the burden of light refraction to each lens, thereby reducing the workload of a single lens for bending light and avoiding excessive bending of the lens that will increase tolerance sensitivity. Moreover, since each of the second lens group and the third lens group has three lenses, the two lens groups have sufficient adjustment capability to ensure clear imaging. Also, too many lenses in a single lens group are avoided, which reduces the momentum and power provided by a motor during zooming, thereby reducing the burden of the optical system onto the motor and achieving fast response. The reasonable distribution of refractive power balances aberrations and improves the imaging quality of the optical system. The reasonable surface shapes make the lenses more compatible, which effectively utilizes the space, smoothly propagates the light, reduces the introduction of aberrations, and improves the imaging quality.

A second aspect of the present disclosure further provides a camera module, which includes the optical system as described in any embodiment of the first aspect and a photosensitive chip. The photosensitive chip is located on the image side of the optical system. The optical system of the present disclosure is incorporated into the camera module. By reasonably designing the surface shape and the refractive power of each lens in the optical system and the optical system to have a fixed total optical length, the camera module realizes zooming capability, is miniaturized, and has high imaging quality.

A third aspect of the present disclosure further provides an electronic device, which includes a housing and a camera module as described in the second aspect. The camera module is received in the housing. By incorporating the camera module of the present disclosure into the electronic device, the electronic device realizes zooming capability and has high imaging quality and fast response speed. The miniaturized camera module also saves more space for installing other components.

# EP 4 542 280 A2

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1A is a schematic diagram of an optical system according to a first embodiment of the present disclosure in a short focal state.
FIG. 1B shows an aberration diagram of the optical system of the first embodiment in the short focal state.
FIG. 1C is a schematic diagram of the optical system of the first embodiment in a medium telephoto state.
FIG. 1D shows an aberration diagram of the optical system of the first embodiment in the medium telephoto state.
FIG. 1E is a schematic diagram of the optical system of the first embodiment in a telephoto state.
FIG. 1F shows an aberration diagram of the optical system of the first embodiment in the telephoto state.
FIG. 2A is a schematic diagram of an optical system according to a second embodiment of the present disclosure in a short focal state.
FIG. 2B shows an aberration diagram of the optical system of the second embodiment in the short focal state.
FIG. 2C is a schematic diagram of the optical system of the second embodiment in a medium telephoto state.
FIG. 2D shows an aberration diagram of the optical system of the second embodiment in the medium telephoto state.
FIG. 2E is a schematic diagram of the optical system according to the second embodiment in a telephoto state.
FIG. 2F shows an aberration diagram of the optical system of the second embodiment in the telephoto state.
FIG. 3A is a schematic diagram of an optical system according to a third embodiment of the present disclosure in a short focal state.
FIG. 3B shows an aberration diagram of the optical system of the third embodiment in the short focal state.
FIG. 3C is a schematic diagram of the optical system of the third embodiment in a medium telephoto state.
FIG. 3D shows an aberration diagram of the optical system of the third embodiment in the medium telephoto state.
FIG. 3E is a schematic diagram of the optical system of the third embodiment in a telephoto state.
FIG. 3F shows an aberration diagram of the optical system of the third embodiment in the telephoto state.
FIG. 4A is a schematic diagram of an optical system according to a fourth embodiment of the present disclosure in a short focal state.
FIG. 4B shows an aberration diagram of the optical system of the fourth embodiment in the short focal state.
FIG. 4C is a schematic diagram of the optical system of the fourth embodiment in a medium telephoto state.
FIG. 4D shows an aberration diagram of the optical system of the fourth embodiment in the medium telephoto state.
FIG. 4E is a schematic diagram of the optical system of the fourth embodiment in a telephoto state.
FIG. 4F shows an aberration diagram of the optical system of the fourth embodiment in the telephoto state.
FIG. 5A is a schematic diagram of an optical system according to a fifth embodiment of the present disclosure in a short focal state.
FIG. 5B shows an aberration diagram of the optical system of the fifth embodiment in the short focal state.
FIG. 5C is a schematic diagram of the optical system of the fifth embodiment in a medium telephoto state.
FIG. 5D shows an aberration diagram of the optical system of the fifth embodiment in the medium telephoto state.
FIG. 5E is a schematic diagram of the optical system of the fifth embodiment in a telephoto state.
FIG. 5F shows an aberration diagram of the optical system of the fifth embodiment in the telephoto state.
FIG. 6 is a schematic diagram of a camera module according to an embodiment of the present disclosure.
FIG. 7 is a schematic diagram of an electronic device according to an embodiment of the present disclosure.

DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

A first aspect of the present disclosure provides an optical system consisting of eight lenses with refractive power. From an object side to an image side along an optical axis of the optical system, the eight lenses sequentially include a first lens, a second lens, a third lens, a fourth lens, a fifth lens, a sixth lens, a seventh lens, and an eighth lens. The first lens and the second lens form a first lens group with negative refractive power. The third lens to the fifth lens form a second lens group with positive refractive power. The sixth lens to the eighth lens form a third lens group having negative refractive power. The first lens group is fixed relative to an imaging plane of the optical system. The second lens group and the third lens group are configured to move along the optical axis between the first lens group and the imaging plane to realize zooming capability of the optical system. The present disclosure moves the second lens group and the third lens group between the first lens group and the imaging plane, thereby enabling the optical system to realize zooming capability. The total length of the optical system does not change during zooming. That is, the optical system has a fixed total length, which meets the miniaturization requirements of the optical system. The eight lenses with refractive power evenly distribute the burden of light refraction to each lens, thereby reducing the workload of a single lens for bending light and avoiding excessive bending of the lens that will increase tolerance sensitivity. Moreover, since each of the second lens group and the third lens group includes three lenses, the two lens groups have sufficient adjustment capability to ensure clear imaging. Also, too many lenses in a single lens group are avoided, which reduces the momentum and power provided by a motor during zooming, thereby reducing the burden of the optical system onto the motor and achieving fast response. The reasonable distribution of refractive power balances aberrations and improves the imaging quality of the optical system. The reasonable surface shapes make the lenses more compatible, which effectively utilizes the space, smoothly propagates the light, reduces the introduction of aberrations, and improves the imaging quality.

In some embodiments, $1 < fmax/fmin < 2.1$. Wherein, fmax is a maximum focal length of the optical system, and fmin is a minimum focal length of the optical system. The above relationship ensures the zooming capability of the optical system and multiple focal length coverage. Furthermore, $1.1 < fmax/fmin < 1.9$.

In some embodiments, $-1.5 < f12/fmax < -0.5$. Wherein, f12 is a combined focal length of the first lens to the second lens. The above relationship allows the refractive power of the first lens group to be moderate, which avoids excessive bending of the lenses. Furthermore, $-1.3 < F12/fmax < -0.8$.

In some embodiments, $0.25 < f345/fmax < 0.8$. Wherein, f345 is a combined focal length of the third lens to the fifth lenses. The above relationship allows the refractive power of the second lens group to be moderate, which avoids excessive bending of the lenses and effectively adjusts the focal length of the optical system.

In some embodiments, $-1.1 < f678/fmax < -0.3$. Wherein, f678 is a combined focal length of the sixth lens to the eighth lenses. The above relationship allows the refractive power of the third lens group to be moderate, which avoids excessive bending of the lenses, achieves efficient focusing, and avoids the introduction of too much aberrations, thereby improving the imaging quality.

In some embodiments, $1 < FOVmax/FOVmin < 2.1$. Wherein, FOVmax is a maximum field of view of the optical system, and FOVmin is a minimum field of view of the optical system. The above relationship ensures the wide variation of the field of view and improves the applicability of shooting scenarios. Furthermore, $1.1 < FOV max/FOVmin < 1.9$.

In some embodiments, $30° < FOV max < 45°$. The above relationship allows the optical system to exhibit wide-angle characteristics in the short focal state. Furthermore, $32° < FOVmax < 42°$.

In some embodiments, $16° < FOV min < 36°$. The above relationship allows the optical system to exhibit telephoto characteristics in the telephoto state. Furthermore, $18° < FOVmin < 34°$.

In some embodiments, $1 < FNOmax/FNOmin < 1.8$. Wherein, FNOmax is a maximum F-number of the optical system, and FNOmin is a minimum F-number of the optical system. The above relationship regulates different light intensities and avoids significant changes in the brightness of the captured images caused by excessive changes in the aperture during zooming. Furthermore, $1.1 < FNOmax/FNOmin < 1.6$.

In some embodiments, $2.4 < FNOmax < 3.4$. The above relationship allows the optical system to control the amount of incoming light, avoids the introduction of excessive aberrations, and improves the depth of field. Furthermore, $2.6 < FNOmax < 3.2$.

In some embodiments, $1.5 < FNOmin < 2.6$. The above relationship allows the optical system to increase the amount of incoming light and achieves the shooting effect of background blurring. Furthermore, $1.7 < FNOmin < 2.4$.

In some embodiments, $-1.9 < f12/f345 < -2.7$. The above relationship allows the refractive power of the first lens group and the second lens group to be compatible with each other, which balances aberrations, reducing system sensitivity, and improves zooming efficiency, thereby enhancing the overall resolution and response speed of the optical system. Furthermore- $2.1 < f12/f345 < -2.5$.

In some embodiments, $1.2 < f12/f678 < 2.1$. The above relationship allows the refractive power of the first lens group and the third lens group to be compatible with each other, which balances aberrations, reduces system sensitivity, and improves zooming efficiency, thereby enhancing the overall resolution and response speed of the optical system. Furthermore, $1.4 < f12/f678 < 1.95$.

In some embodiments, $5 < TTL/ImgH < 9$. Wherein, TTL is a distance from an object side surface of the first lens to the imaging plane at the optical axis, i.e. the total optical length, and ImgH is half of an image height corresponding to a maximum field of view of the optical system. The above relationship enables the optical system to have telephoto and miniaturized characteristics, thereby facilitating the placement of a camera module containing the optical system into an electronic device. Furthermore, $6 < TTL/ImgH < 8$.

In some embodiments, $0.3 < Yc82/SD82 < 0.9$. Wherein, Yc82 is a vertical height from an off-axis vertex of an image side surface of the eighth lens to the optical axis, and SD82 is an effective half-aperture of the image side surface of the eighth lens. By satisfying the above relationship, the travelling direction of the light is adjusted, which improves the imaging quality such as relative illumination at the margin area of the imaging plane. Also, the surface shape of the eighth lens is adjusted to correct off-axis aberrations such as curvature of field. The incident angle of light at the imaging surface is also adjusted to enhance the response efficiency of the electronic photosensitive component, thereby further improving the imaging quality such as relative illumination.

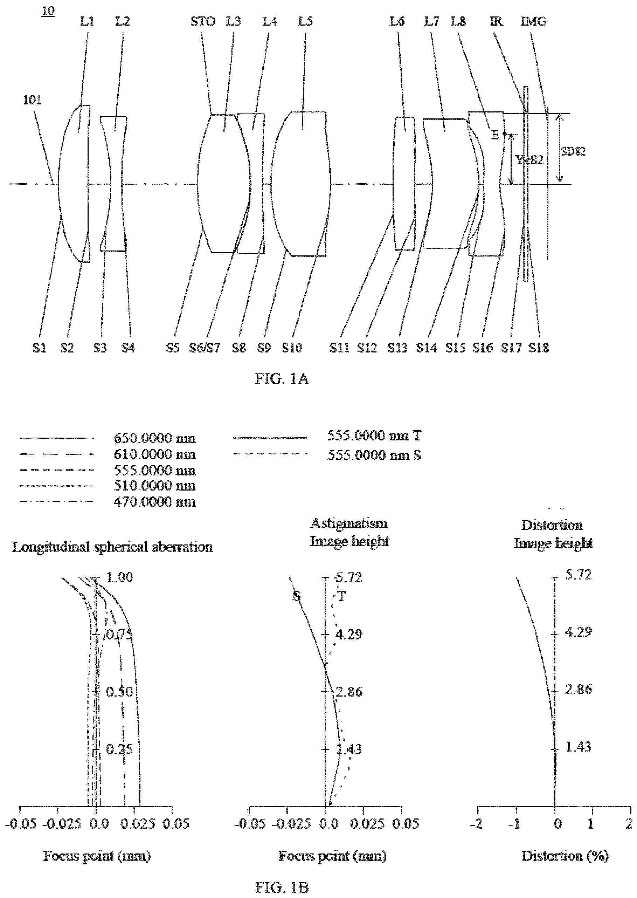

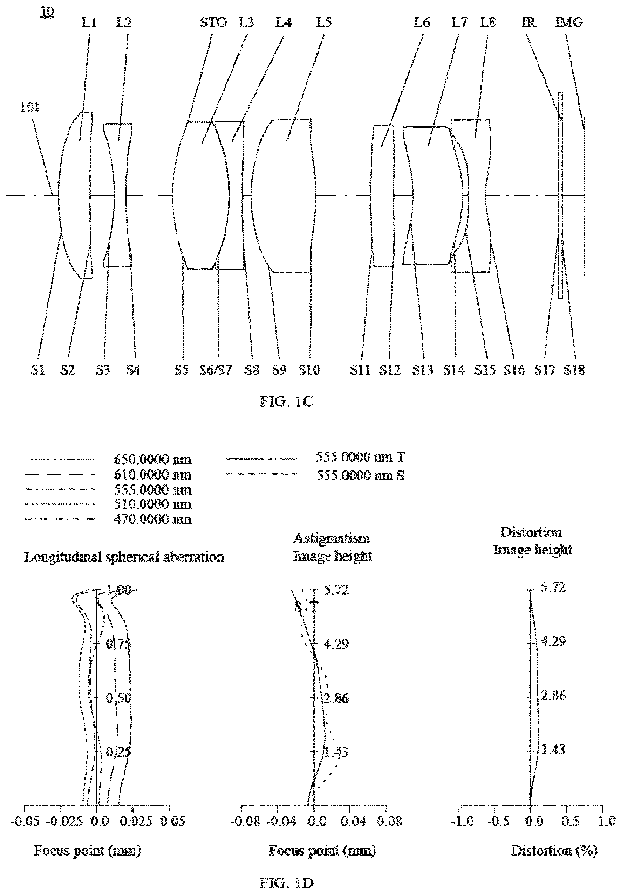

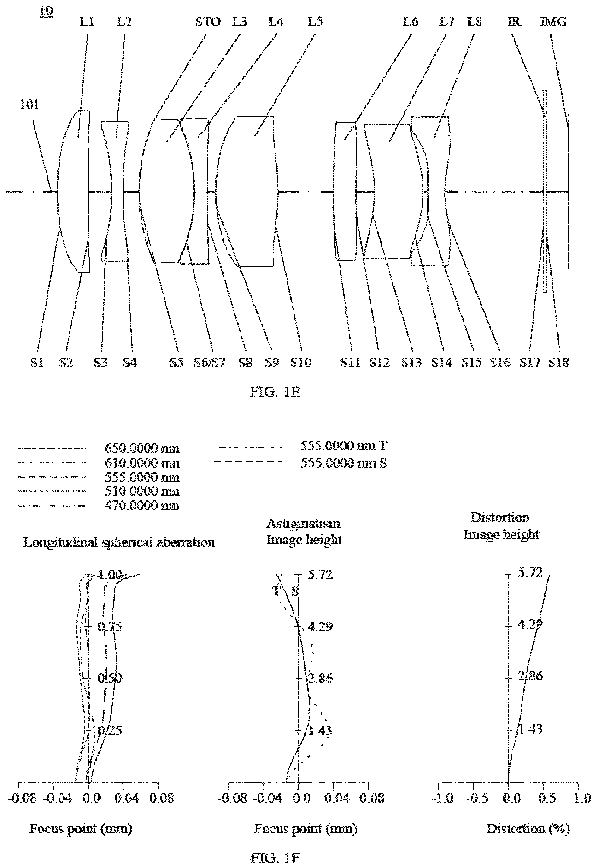

It should be noted that the off-axis vertex refers to an off-axis point of the surface curve at which the first-order derivative is zero. Referring to FIG. 1, which is a schematic diagram showing the parameter Yc82 and the corresponding off-axis vertex E according to the first embodiment of the present disclosure. Furthermore, $0.5 < Yc82/SD82 < 0.8$.

In some embodiments, $0.8 < SDmax/ImgH < 1.3$. Wherein, SDmax is a maximum effective half-aperture from the object side surface of the first lens to the image side surface of the eighth lens. The above relationship ensures that the aperture of the optical system is substantially equal to the size of the imaging surface, which helps to unify the radial size, improves the space utilization, and achieves miniaturization. Furthermore, $0.9 < SDmax/ImgH < 1.2$.

In some embodiments, $1.5 < GL2/GL1 < 2.7$. Wherein, GL1 is a distance between the object side surface of the first lens and the image side surface of the second lens at the optical axis, and GL2 is a distance between an object side surface of the third lens and an image side surface of the fifth lens at the optical axis. The above relationship helps to reasonably allocate the axial space and leave sufficient stroke space for zooming. Furthermore, $1.7 < GL2/GL1 < 2.5$.

In some embodiments, $0.9 < GL2/GL3 < 1.8$. Wherein, GL3 is a distance between an object side surface of the sixth lens and the image side surface of the eighth lens at the optical axis. The above relationship allows the sizes of the second lens group and the third lens group to match each other and the imaging performances to be similar, which balances the aberrations and improves the imaging quality. Furthermore, $1 < GL2/GL3 < 1.65$.

In some embodiments, $1 < TDmax/TDmin < 1.5$. Wherein, TDmax is a maximum distance between the object side surface of the first lens and the image side surface of the eighth lens at the optical axis, and TDmin is a minimum distance between the object side surface of the first lens and the image side surface of the eighth lens at the optical axis. By satisfying the above relationship, the zooming stroke length is moderate, which reduces the response time for zooming and provides sufficient zooming range. Furthermore, $1 < TDmax/TDmin < 1.3$.

In some embodiments, $0.5 < \Delta A/\Delta C < 1.1$. Wherein, $\Delta A$ is a maximum stroke of the second lens group at the optical axis, and $\Delta C$ is a maximum stroke of the third lens group at the optical axis. The above relationship allows the strokes of the two lens groups to be close with more overlapping space, which saves the space and improves the zooming capability. Furthermore, $0.6 < \Delta A/\Delta C < 0.9$.

In some embodiments, the first lens has positive refractive power, which shortens the total length of the optical system. The object side surface of the first lens is convex near the optical axis, thereby reducing the incident angle of light at the object side surface and improving the field of view. The second lens has negative refractive power, thereby eliminating the negative spherical aberration generated by the first lens. The object side surface of the second lens is concave near the optical axis, and the image side surface of the second lens is concave near the optical axis, thereby improving the negative refractive power of the second lens and preventing the incident light from converging too quickly. The third lens has positive refractive power, and when the third lens is combined with the fourth lens, the system chromatic aberrations are eliminated. The object side surface of the third lens is convex near the optical axis, and the image side surface of the third lens is convex near the optical axis, thereby matching the surface shapes of the fourth lens and eliminate aberrations. The fourth lens has negative refractive power, and when the fourth lens is combined with the third lens, the system chromatic aberrations are eliminated. The object side surface of the fourth lens is concave near the optical axis, thereby matching the surface shape of the third lens and eliminates aberrations. The fifth lens has positive refractive power, thereby converging the light and preventing the aperture of the sixth lens from being too large. The object side surface of the fifth lens is convex near the optical axis, and the image side surface of the fifth lens is convex near the optical axis, thereby improving the refractive power of the fifth lens. The sixth lens has refractive power. The object side surface of the sixth lens is convex near the optical axis, and the image side surface of the sixth lens is concave near the optical axis. When the sixth lens is combined with the seventh lens, the aberrations are corrected. The seventh lens has refractive power. The object side surface of the seventh lens is concave near the optical axis, and the image side surface of the seventh lens is convex near the optical axis. When the seventh lens is combined with the sixth lens, the aberrations are corrected. The eighth lens has negative refractive power, thereby correcting axial aberrations. The object side surface of the eighth lens is convex near the optical axis, and the image side surface of the eighth lens is concave near the optical axis, thereby reducing the incident angle of light near the optical axis at the surfaces of the eighth lens and improving the transmissivity.

In some embodiments, the third lens and the fourth lens are cemented to eliminate the system chromatic aberrations.

In some embodiments, $0.7 < f1/fmax < 1.6$. Wherein, f1 is a focal length of the first lens. By satisfying the above relationship, the refractive power is reasonably distributed, which improves the imaging quality. Furthermore, $0.9 < f1/fmax < 1.55$.

In some embodiments, $-0.8 < f2/fmax < -0.2$. Wherein, f2 is a focal length of the second lens. By satisfying the above relationship, the refractive power is reasonably distributed, which improves the imaging quality. Furthermore, $-0.7 < f2/fmax < -0.3$.

In some embodiments, $0.2 < f3/fmax < 0.6$. Wherein, f3 is a focal length of the third lens. By satisfying the above relationship, the refractive power is reasonably distributed, which improves the imaging quality. Furthermore, 0.25<f3/fmax<0.55.

In some embodiments, -0.8<f4/fmax<-0.2. Wherein, f4 is a focal length of the fourth lens. By satisfying the above relationship, the refractive power is reasonably distributed, which improves the imaging quality. Furthermore, -0.7<f4/fmax<-0.3.

In some embodiments, 0.25<f5/fmax<1. Wherein, f5 is a focal length of the fifth lens. By satisfying the above relationship, the refractive power is reasonably distributed, which improves the imaging quality. Furthermore, 0.4<f5/fmax<0.85.

In some embodiments, 1.2<f8/fmax<-0.25. Wherein, f8 is a focal length of the sixth lens. By satisfying the above relationship, the refractive power is reasonably distributed, which improves the imaging quality. Furthermore, -1<f8/fmax<-0.3.

In some embodiments, 0.4<R1/fmax. Wherein, R1 is a radius of curvature of the object side surface of the first lens at the optical axis. By satisfying the above relationship, the surface shape is reasonably designed, which improves the imaging quality. Furthermore, 0.5<R1/fmax<3.5.

In some embodiments, 0.8<R4/fmax. Wherein, R4 is a radius of curvature of the image side surface of the second lens at the optical axis. By satisfying the above relationship, the surface shape is reasonably designed, which improves the imaging quality. Furthermore, 0.8<R4/fmax<5.

In some embodiments, 0.3<R5/fmax. Wherein, R5 is a radius of curvature of the object side of the third lens at the optical axis. By satisfying the above relationship, the surface shape is reasonably designed, which improves the imaging quality. Furthermore, 0.3<R5/fmax<2.5.

In some embodiments, -0.6<R6/fmax<-0.2. Wherein, R6 is a radius of curvature of the image side surface of the third lens at the optical axis. By satisfying the above relationship, the surface shape is reasonably designed, which improves the imaging quality. Furthermore, -0.5<R6/fmax<-0.3.

In some embodiments, 0.3<R9/fmax<1. Wherein, R9 is a radius of curvature of the object side surface of the fifth lens at the optical axis. By satisfying the above relationship, the surface shape is reasonably designed, which improves the imaging quality. Furthermore, 0.35<R9/fmax<0.9.

In some embodiments, -1<R10/fmax<-0.4. Wherein, R10 is a radius of curvature of the image side surface of the fifth lens at the optical axis. By satisfying the above relationship, the surface shape is reasonably designed, which improves the imaging quality. Furthermore, -0.95<R10/fmax<-0.4.

In some embodiments, 1.5<R11/fmax. Wherein, R11 is a radius of curvature of the object side surface of the sixth lens at the optical axis. By satisfying the above relationship, the surface shape is reasonably designed, which improves the imaging quality. Furthermore, 2<R11/fmax<4.

In some embodiments, 1<R12/fmax. Wherein, R12 is a radius of curvature of the image side surface of the sixth lens at the optical axis. By satisfying the above relationship, the surface shape is reasonably designed, which improves the imaging quality. Furthermore, 1.3<R12/fmax<4.

In some embodiments, -0.9<R13/fmax<-0.3. Wherein, R13 is a radius of curvature of the object side surface of the seventh lens at the optical axis. By satisfying the above relationship, the surface shape is reasonably designed, which improves the imaging quality. Furthermore, -0.7<R13/fmax<-0.35.

In some embodiments, -0.9<R14/fmax<-0.2. Wherein, R14 is a radius of curvature of the image side surface of the seventh lens at the optical axis. By satisfying the above relationship, the surface shape is reasonably designed, which improves the imaging quality. Furthermore, -0.75<R14/fmax<-0.3.

In some embodiments, 0.2<R15/fmax<1.3. Wherein, R15 is a radius of curvature of the object side surface of the eighth lens at the optical axis. By satisfying the above relationship, the surface shape is reasonably designed, which improves the imaging quality. Furthermore, 0.25<R15/fmax<1.2.

In some embodiments, 0.1<R16/fmax<0.4. Wherein, R16 is a radius of curvature of the image side surface of the eighth lens at the optical axis. By satisfying the above relationship, the surface shape is reasonably designed, which improves the imaging quality. Furthermore, 0<R16/fmax<0.4.

In some embodiments, 1.4<CT1/CT2<3.5. Wherein, CT1 is a thickness of the first lens at the optical axis, and CT2 is a thickness of the second lens at the optical axis. The above relationship balances the axial chromatic aberrations generated by the first lens. Furthermore, 1.8<CT1/CT2<3.2.

In some embodiments, 3<CT3/CT4<5. Wherein, CT3 is a thickness of the third lens at the optical axis, and CT4 is a thickness of the fourth lens at the optical axis. The above relationship allows the third lens and the fourth lens to match each other, which eliminates the on-axis chromatic aberrations. Furthermore, 3.2<CT3/CT4<4.7.

In some embodiments, 4<CT5/CT4<5.5. Wherein, CT5 is a thickness of the fifth lens at the optical axis. The above relationship prevents the fifth lens from being too thin, thereby ensuring a sufficient light deflection space in the fifth lens. Furthermore, 4.4<CT5/CT4<5.2.

In some embodiments, 1.1<CT7/CT6<2.8. Wherein, CT6 is a thickness of the sixth lens at the optical axis, and CT7 is a thickness of the seventh lens at the optical axis. The above relationships allow the thicknesses of the sixth and seventh lenses to be similar, thereby achieving even distribution of refractive power. Furthermore, 1.5<CT7/CT6<2.4.

In some embodiments, 2.2<CT7/CT8<3.7. Wherein, CT8 is a thickness of the eighth lens at the optical axis. The above relationship allows the thickness of the eighth lens to be moderate, which eliminates the off-axis chromatic aberrations. Furthermore, 2.6<CT7/CT8<3.2.

The above technical features of the optical system of the present disclosure may be combined with each other to achieve corresponding effects.

In one embodiment, the lenses may be made of glass or plastic. When the lenses are made of glass, the degree of freedom in designing the refractive power of the lenses of the optical system is increased, and the glass lenses may be made by grinding or mechanical molding. When the lenses are made of plastic, the manufacturing cost is reduced. In addition, spherical or aspherical surface (ASPs) may be included at the surfaces of the lenses. The spherical lenses reduce the manufacturing difficulty. When the lenses have aspherical surfaces, more control variables are obtained to reduce aberrations, reduce the number of lenses, and reduce the total length of the optical system of the present disclosure. The aspherical lenses may be made by injection molding or mechanical molding.

In one embodiment, additives may be selectively added to at least one lens material to produce light absorption or interference effects. The additives change the transmissivity of the lens to specific wavelengths of light, thereby reducing stray light and color deviation. Optionally, when the lens has an aspherical surface, it means that the entire or a portion of the optical effective area of the lens is aspherical.

In one embodiment, when the surface of the lens is convex but the position of the convex surface is not defined, it means that the surface of the lens may be convex near the optical axis. When the surface of the lens is concave but the position of the concave surface is not defined, it means that the surface of the lens may be concave near the optical axis. In the optical system of the present disclosure, when the lens is indicated to have positive or negative refractive power or have a focal length, the refractive power or focal length is near the optical axis. Optionally, a critical point is a tangent point on the surface of the lens, which is tangent to a plane perpendicular to the optical axis, except for the intersection point with the optical axis. The inflection point is an intersection point on the surface of the lens, which changes from a positive curvature to a negative curvature.

In one embodiment, the optical system may further include at least one component with light refraction function, such as a prism or a reflector, which is selectively installed on the optical path between the target subject and the imaging plane. The component is used to provide a more flexible spatial configuration for the optical system, such that the miniaturization of the electronic device is not limited by the total optical length of the optical system. Optionally, the optical system may selectively include three or more light refraction components, and the types, the quantities, and positions of the light refraction components are not limited.

Implementations of the present technology will now be described with reference to different embodiments and figures.

First embodiment

Referring to FIGS. 1A to 1F, the optical system 10 of the embodiment consists of following eight lenses from the object side to the image side.

The first lens L1 has positive refractive power. Near the optical axis, the object side surface S1 is convex, and the image side surface S2 is concave.

The second lens L2 has negative refractive power. Near the optical axis, the object side surface S3 is concave, and the image side surface S4 is concave.

The third lens L3 has positive refractive power. Near the optical axis, the object side surface S5 is convex, and the image side surface S6 is convex.

The fourth lens L4 has negative refractive power. Near the optical axis, the object side surface S7 is concave, and the image side surface S8 is concave.

The fifth lens L5 has positive refractive power. Near the optical axis, the object side surface S9 is convex, and the image side surface S10 is convex.

The sixth lens L6 has positive refractive power. Near the optical axis, the object side surface S11 is convex, and the image side surface S12 is concave.

The seventh lens L7 has positive refractive power. Near the optical axis, the object side surface S13 is concave, and the image side surface S14 is convex.

The eighth lens L8 has negative refractive power. Near the optical axis, the object side surface S14 is convex, and the image side surface S16 is concave.

The first lens L1 to the eighth lens L8 include both glass lenses and plastic lenses. In other embodiments, all the lenses may also be glass lenses or plastic lenses. The third lens L3 and the fourth lens L4 are cemented. In other embodiments, other lenses or none of the lenses may be cemented.

The optical system 10 further includes an aperture stop STO and a filter IR. In the embodiment, the aperture stop STO is located at the object side surface of the third lens L3. In other embodiments, the aperture stop STO may also be separated from the object side surface of the third lens L3. For example, the aperture stop STO may be located between the first lens L1 and the second lens L2 or on the object side of the first lens L1. In the embodiment, the filter IR is an infrared cutoff filter made of glass with a coating thereon. The filter IR is located between the eighth lens L8 and the imaging plane IMG, and includes an object side surface S17 and an image side surface S18. In other embodiments, the filter IR is not limited to infrared cutoff filters, but may also be a dual channel filter, an infrared filter, or other types of filters. The filter IR may also be made of plastic.

The imaging plane IMG of the optical system 10 is located at the image side of the optical system 10. When the optical system 10 is mounted into the camera module, the imaging plane IMG overlaps with the effective pixel area of the photosensitive chip.

The first lens L1 to the second lens L2 of the optical system 10 are fixed to each other to form the first lens group. The third lens L3 to the fifth lens L5 are fixed to each other to form the second lens group. The sixth lens L6 to the eighth lens L8 are fixed to each other to form the third lens group. The first lens group is fixed relative to the imaging plane IMG. Each of the second lens group and the third lens group is able to move along the optical axis 101 between the first lens group and the imaging plane IMG, thereby achieving the zooming capability of the optical system 10. In the embodiment, the filter IR is fixed relative to the imaging plane IMG, which reduces the weight of the moving lens groups and improves the zooming speed. In other embodiments, the filter IR may also be fixed to the third lens group or the second lens group for facilitating the assembly of the lenses.

Table 1A shows detailed structural parameters of the optical system 10 of the embodiment. The surface numerals S1 and S2 are the object side surface S1 and the image side surface S2 of the first lens L1, respectively. For a specific lens, the surface with a smaller surface numeral is the object side surface, and the surface with a larger surface numeral is the image side surface, and so forth for other lenses. The focal length, the refractive index, and Abbe number are obtained by visible rays with a reference wavelength of 555 nm. The Y radius is the radius of curvature of the object side surface or image side surface of the related surface numeral at the optical axis 101. In the "thickness" column of the first lens L1, the first value is the thickness of the lens at the optical axis 101, and the second value is the distance from the image side surface of the lens to the next optical surface (i.e., the object side surface of the next lens or the surface of the aperture stop) at the optical axis 101, and so forth for other lenses. The units of the Y radius, the thickness, and the focal length are all millimeters (mm).

Table 1A

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S1 | first lens L1 | asphere | 17.583 | 2.411 | plastic | 1.588 | 28.400 | 30.292 |
| S2 | | asphere | 916.263 | 1.867 | | | | |
| S3 | second lens L2 | sphere | -15.834 | 0.878 | glass | 1.800 | 46.500 | -12.460 |
| S4 | | sphere | 28.248 | A | | | | |
| S5(STO) | third lens L3 | asphere | 13.385 | 4.349 | glass | 1.678 | 55.600 | 10.285 |
| S6 | cemented surface | sphere | -12.725 | 0.005 | cement | | | |
| S7 | **fourth** lens L4 | sphere | -12.725 | 1.000 | glass | 1.850 | 30.000 | -13.449 |
| S8 | | sphere | 124.005 | 0.674 | | | | |
| S9 | fifth lens L5 | asphere | 13.409 | 4.875 | plastic | 1.544 | 56.000 | 14.936 |
| S10 | | asphere | -18.136 | B | | | | |
| S11 | sixth lens L6 | sphere | 93.145 | 1.768 | plastic | 1.544 | 56.000 | 1147.374 |

(continued)

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S12 | | asphere | 108.683 | 1.448 | | | | |
| S13 | seventh lens L7 | asphere | -12.046 | 3.800 | plastic | 1.670 | 19.200 | 93.152 |
| S14 | | asphere | -11.404 | 0.403 | | | | |
| S15 | eighth lens L8 | asphere | 18.799 | 1.312 | plastic | 1.544 | 56.000 | -15.607 |
| S16 | | asphere | 5.719 | C | | | | |
| S17 | filter IR | sphere | infinity | 0.300 | glass | 1.510 | 64.000 | - |
| S18 | | sphere | infinity | 1.662 | | | | |
| IMG | imaging plane | sphere | infinity | 0.000 | | | | |

Table 1B includes supplementary parameters to Table 1A, specifically the parameters when the optical system 10 is switched to the short focal state (Z1), the medium telephoto state (Z2), and the telephoto state (Z3).

Table 1B

| | FNO | TTL (mm) | FOV (°) | ImgH (mm) | F (mm) | A (mm) | B (mm) | C (mm) |
|---|---|---|---|---|---|---|---|---|
| Short focal state (Z1) | 2.200 | 40.100 | 34.300 | 5.720 | 18.700 | 6.203 | 5.134 | 1.991 |
| Medium telephoto state (Z2) | 2.600 | 40.100 | 26.000 | 5.720 | 24.800 | 3.530 | 4.207 | 5.592 |
| Telephoto state (Z3) | 3.000 | 40.100 | 21.000 | 5.720 | 30.500 | 1.262 | 4.334 | 7.730 |

Wherein, FNO is the F-number of the optical system 10, TTL is the distance from the object side surface S1 of the first lens L1 to the imaging plane IMG of the optical system 10 at the optical axis 101, FOV is the maximum field of view of the optical system, ImgH is half of the image height corresponding to the maximum field of view of the optical system 10, f is the focal length of the optical system 10, A is the distance between the first lens group and the second lens group at the optical axis 101, B is the distance between the second lens group and the third lens group at the optical axis 101, and C is the distance between the third lens group and the filter IR at the optical axis 101.

According to Table 1B, when the optical system changes from the short focal state Z1 to the telephoto state Z3, each of the second lens group and the third lens group moves along the optical axis 101 towards the first lens group. When the optical system changes from the telephoto state Z3 to the short focal state Z1, each of the second lens group and the third lens group moves along the optical axis towards the imaging plane IMG.

It should be noted that Table 1B only provides exemplary parameters of the optical system 10 in the three zooming states. The switching between two zooming states in the embodiment is continuous, and the optical system 10 also forms images during the switching process.

In the embodiment, a portion of the lenses have aspherical surfaces, and another portion of the lenses have spherical surfaces. In other embodiments, the surface shapes of the first lens L1 to the eighth lens L8 may all be spherical or aspherical. The surface shape of the aspherical surface in the embodiment may be expressed but not limited to the following aspherical formula:

$$x = \frac{ch^2}{1 + \sqrt{1 - (k+1)c^2h^2}} + \sum Aih^i$$

Wherein, x is a distance from the corresponding point of the aspherical surface to a plane tangent to the on-axis vertex, h is a distance from the corresponding point of the aspherical surface to the optical axis 101, c is a curvature of a vertex of the aspherical surface, k is cone constant, and Ai is a coefficient corresponding to the $i^{th}$ high-order term in the above aspherical surface formula. Table 1C shows the high-order coefficients A4, A6, A8, A10, A12, A14, A16, A18 and A20 that applied for the aspherical surfaces in the first embodiment.

Table 1C

| Surface numeral | k | A4 | A6 | A8 | A10 |
|---|---|---|---|---|---|
| S1 | 1.592287E-01 | 7.986195E-05 | 2.926520E-06 | -3.050614E-07 | 4.098484E-08 |
| S2 | 1.163521E-14 | 2.694112E-05 | 5.327606E-07 | 1.091634E-07 | -4.503213E-10 |
| S5 | 0.000000E+00 | -4.084485E-05 | -9.394938E-07 | 0.000000E+00 | 0.000000E+00 |
| S9 | -7.670579E+00 | 4.295773E-04 | -3.809739E-06 | 4.684511E-07 | -2.975808E-08 |
| S10 | -1.829882E+01 | -3.179949E-05 | 1.118532E-05 | -2.991184E-08 | -9.234545E-09 |
| S11 | 9.897088E+01 | 3.838071E-04 | -2.630387E-05 | 6.264432E-07 | 5.718901E-09 |
| S12 | -9.885069E+01 | 3.283600E-04 | -5.103610E-05 | 1.000583E-07 | 1.100605E-07 |
| S13 | 3.558734E+00 | 8.749300E-04 | -1.114450E-05 | -6.225487E-06 | 9.948047E-07 |
| S14 | 3.086159E+00 | -3.575993E-03 | 1.221914E-03 | -2.168562E-04 | 2.545918E-05 |
| S15 | -9.635550E+01 | -1.290170E-02 | 2.224790E-03 | -3.177599E-04 | 3.140763E-05 |
| S16 | -7.910389E+00 | -6.017775E-03 | 8.386106E-04 | -9.736914E-05 | 8.102243E-06 |
| Surface numeral | A12 | A14 | A16 | A18 | A20 |
| S1 | -2.817539E-09 | 1.164068E-10 | -2.738514E-12 | 3.337289E-14 | -1.487201E-16 |
| S2 | -1.475607E-10 | -2.789067E-12 | 1.104597E-12 | -4.583855E-14 | 6.076087E-16 |
| S5 | 0.000000E+00 | 0.000000E+00 | 0.000000E+00 | 0.000000E+00 | 0.000000E+00 |
| S9 | 1.903696E-09 | -8.401448E-11 | 2.431581E-12 | -4.007099E-14 | 2.819785E-16 |
| S10 | 1.621438E-09 | -1.034563E-10 | 3.886074E-12 | -7.675170E-14 | 6.729287E-16 |
| S11 | -3.110621E-10 | 0.000000E+00 | 0.000000E+00 | 0.000000E+00 | 0.000000E+00 |
| S12 | -2.588948E-09 | 0.000000E+00 | 0.000000E+00 | 0.000000E+00 | 0.000000E+00 |
| S13 | -7.112565E-08 | 3.412947E-09 | -1.093789E-10 | 2.070624E-12 | -1.760318E-14 |
| S14 | -2.023127E-06 | 1.085753E-07 | -3.771718E-09 | 7.647399E-11 | -6.834205E-13 |
| S15 | -2.099957E-06 | 9.394179E-08 | -2.731544E-09 | 4.746169E-11 | -3.771880E-13 |
| S16 | -4.580670E-07 | 1.701185E-08 | -3.951413E-10 | 5.180035E-12 | -2.908376E-14 |

FIGS. 1B, 1D, and 1F show the aberration diagrams of the optical system 10 in the short focal state Z1, the medium telephoto state Z2, and the telephoto state Z3, respectively.

FIG. 1B shows the longitudinal spherical aberration diagram of the optical system 10 of the first embodiment in the short focal state Z1, FIG. 1D shows the longitudinal spherical aberration diagram of the optical system 10 of the first embodiment in the medium telephoto state Z2, and FIG. 1F shows the longitudinal spherical aberration diagram of the optical system 10 of the first embodiment in the telephoto state Z3. The reference wavelengths are 650 nm, 610 nm, 555 nm, 510 nm, 470 nm, and 435 nm. The horizontal coordinate along the X-axis represents the deviation of the focus point. The vertical coordinate along the Y-axis represents the normalized field of view. The longitudinal spherical aberration diagram represents the deviation of the focus point when the light with different wavelengths travels through the lenses of the optical system 10. From the figures, the spherical aberration data of the optical system 10 in the first embodiment is good, indicating that the imaging quality of the optical system 10 in the embodiment is good.

FIG. 1B further shows the longitudinal astigmatism diagram of the optical system 10 of the first embodiment in the short focal state Z2, FIG. 1D further shows the longitudinal astigmatism diagram of the optical system 10 of the first embodiment in the medium telephoto state Z2, and FIG. 1F further shows the longitudinal astigmatism diagram of the optical system 10 of the first embodiment in the telephoto state Z3. The horizontal coordinate along the X-axis represents the deviation of the focus point. The vertical coordinate along the Y-axis represents the image heigh in mm. The T curve of the astigmatism diagram represents the curvature of the imaging plane IMG in the tangential direction. The S curve of the astigmatism diagram represents the curvature of the imaging plane IMG in the sagittal direction. From the figures, astigmatism of the optical system 10 has been compensated.

FIG. 1B further shows the longitudinal distortion diagram of the optical system 10 of the first embodiment in the short focal state Z1, FIG. 1D further shows the longitudinal distortion diagram of the optical system 10 of the first embodiment in the medium telephoto state Z2, and FIG. 1F further shows the longitudinal distortion diagram of the optical system 10 of the first embodiment in the telephoto state Z3. The horizontal coordinate along the X-axis represents the distortion (%). The vertical coordinate along the Y-axis represents the image height. The distortion curve represents the magnitude of distortion corresponding to different field of views. From the figures, the distortion of the optical system 10 has been well corrected at the provided wavelengths.

Therefore, the optical system 10 of the embodiment has small aberrations and good imaging quality.

Second embodiment

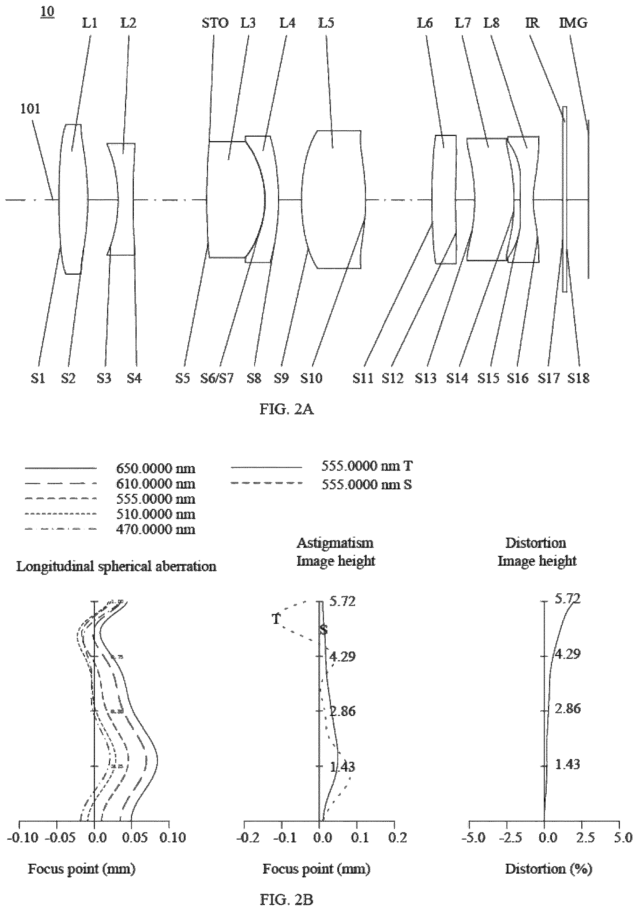

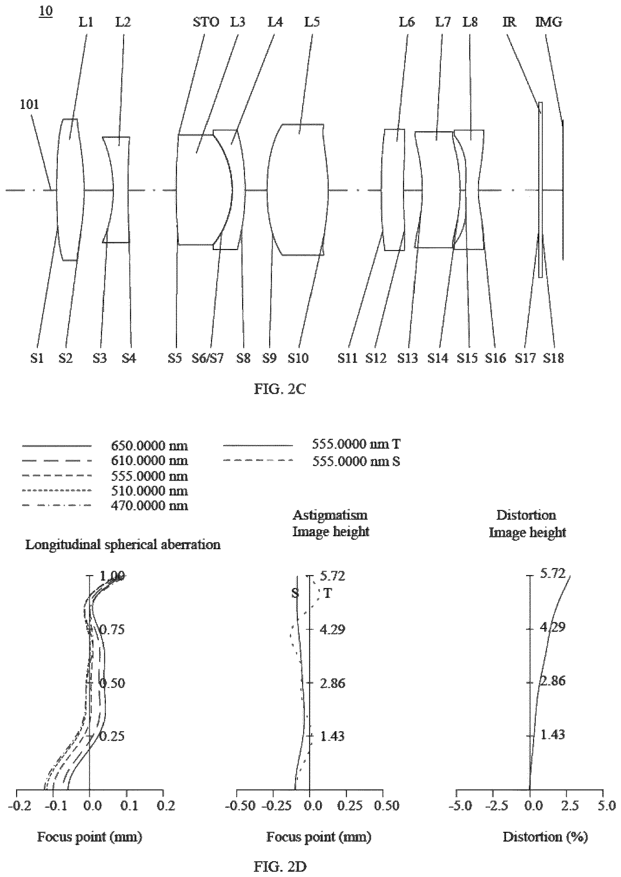

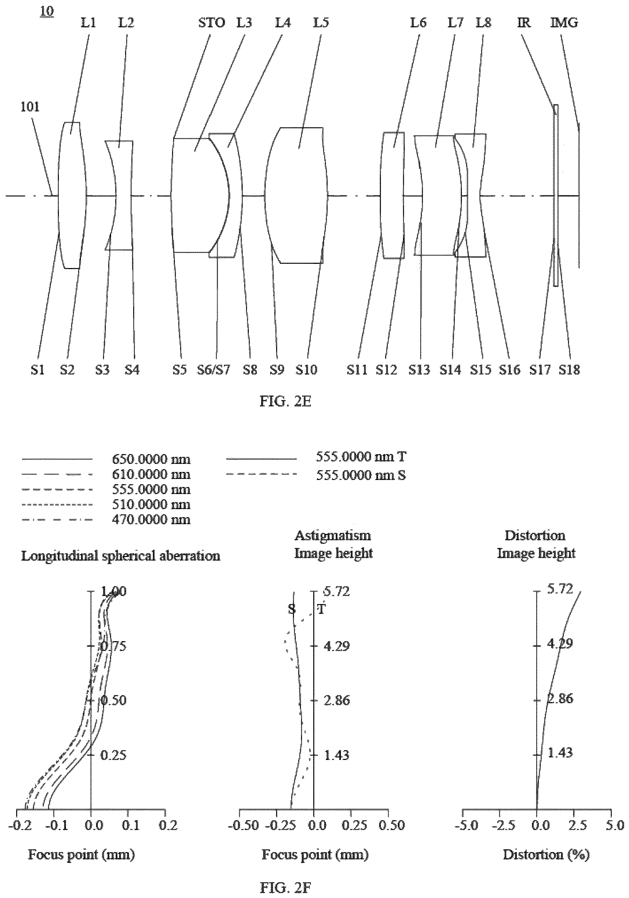

Referring to FIGS. 2A to 2F, the differences between the structures of the second embodiment and the first embodiment include that the image side surface S2 of the first lens L1 is convex near the optical axis, the image side surface S8 of the fourth lens L4 is convex near the optical axis, and the refractive power of the sixth lens L6 is negative.

Table 2A

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S1 | first lens L1 | asphere | 64.960 | 2.207 | plastic | 1.588 | 28.400 | 27.792 |
| S2 | | asphere | -21.716 | 2.331 | | | | |
| S3 | second lens L2 | sphere | -11.248 | 1.180 | glass | 1.800 | 46.500 | -11.872 |
| S4 | | sphere | 67.754 | A | | | | |
| S5(STO) | third lens L3 | asphere | 49.587 | 4.500 | glass | 1.678 | 55.600 | 9.746 |
| S6 | cemented surface | sphere | -7.370 | 0.005 | cement | | | |
| S7 | fourth lens L4 | sphere | -7.370 | 1.036 | glass | 1.850 | 30.000 | -14.622 |
| S8 | | sphere | -19.110 | 1.761 | | | | |
| S9 | fifth lens L5 | asphere | 15.301 | 4.917 | plastic | 1.544 | 56.000 | 15.620 |
| S10 | | asphere | -17.077 | B | | | | |
| S11 | sixth lens L6 | asphere | 78.040 | 1.795 | plastic | 1.544 | 56.000 | -384.475 |
| S12 | | asphere | 56.426 | 1.480 | | | | |
| S13 | seventh lens L7 | asphere | -13.307 | 3.050 | plastic | 1.670 | 19.200 | 274.316 |
| S14 | | asphere | -13.567 | 0.456 | | | | |
| S15 | eighth lens L8 | asphere | 22.354 | 1.009 | plastic | 1.544 | 56.000 | -18.107 |
| S16 | | asphere | 6.745 | C | | | | |
| S17 | filter IR | sphere | infinity | 0.300 | glass | 1.510 | 64.000 | - |
| S18 | | sphere | infinity | 1.662 | | | | |
| IMG | imaging plane | sphere | infinity | 0.000 | | | | |

Table 2B

|  | FNO | TTL(mm) | FOV(°) | ImgH(mm) | f(mm) | A(mm) | B(mm) | C(mm) |
|---|---|---|---|---|---|---|---|---|
| Short focal state (Z1) | 2.200 | 40.800 | 38.300 | 5.720 | 16.200 | 5.641 | 5.125 | 2.277 |
| Medium telephoto state (Z2) | 2.600 | 40.800 | 31.800 | 5.720 | 19.400 | 3.900 | 4.300 | 4.845 |
| Telephoto state (Z3) | 3.000 | 40.800 | 29.600 | 5.720 | 20.800 | 3.138 | 4.125 | 5.778 |

Table 2C shows the high-order coefficients that applied for the aspherical surfaces in the second embodiment, and the surface shape of each lens is limited by the formula mentioned in the first embodiment.

Table 2C

| Surface numeral | k | A4 | A6 | A8 | A10 |
|---|---|---|---|---|---|
| S1 | 4.435628E+01 | 1.320537E-04 | -2.027949E-06 | -4.013760E-07 | 1.065839E-07 |
| S2 | -5.780056E+00 | 1.160662E-04 | -1.760192E-05 | 2.935022E-06 | -2.901904E-07 |
| S5 | 0.000000E+00 | -2.607610E-05 | -6.185391E-08 | 0.000000E+00 | 0.000000E+00 |
| S9 | -7.260294E+00 | 3.421711E-04 | 1.865967E-05 | -2.680121E-06 | 2.825142E-07 |
| S10 | -1.769200E+01 | -1.527615E-04 | 1.560160E-05 | 1.985347E-06 | -3.553666E-07 |
| S11 | 9.900000E+01 | -2.102444E-04 | 8.430185E-05 | -5.922854E-06 | 1.633925E-07 |
| S12 | -9.900000E+01 | -6.561624E-04 | 1.631856E-04 | -1.730313E-05 | 7.198756E-07 |
| S13 | 3.967480E+00 | -1.151617E-04 | 4.710965E-04 | -1.172585E-04 | 1.547705E-05 |
| S14 | 3.117892E+00 | -1.303794E-03 | 1.186856E-03 | -2.988502E-04 | 3.695965E-05 |
| S15 | -2.447444E+01 | -1.091182E-02 | 3.175515E-03 | -6.979949E-04 | 8.031371E-05 |
| S16 | -7.274847E+00 | -6.942097E-03 | 1.862450E-03 | -3.769170E-04 | 4.506010E-05 |
| Surface numeral | A12 | A14 | A16 | A18 | A20 |
| S1 | -9.600855E-09 | 4.639012E-10 | -1.247693E-11 | 1.753984E-13 | -9.908977E-16 |
| S2 | 1.889091E-08 | -8.059689E-10 | 2.224347E-11 | -3.632060E-13 | 2.677364E-15 |
| S5 | 0.000000E+00 | 0.000000E+00 | 0.000000E+00 | 0.000000E+00 | 0.000000E+00 |
| S9 | -1.862057E-08 | 7.940940E-10 | -2.133124E-11 | 3.291729E-13 | -2.212923E-15 |
| S10 | 2.887429E-08 | -1.269224E-09 | 2.974259E-11 | -3.136038E-13 | 8.155969E-16 |

| S11 | -1.518777E-09 | 0.000000E+00 | 0.000000E+00 | 0.000000E+00 | 0.000000E+00 |
|---|---|---|---|---|---|
| S12 | -1.039772E-08 | 0.000000E+00 | 0.000000E+00 | 0.000000E+00 | 0.000000E+00 |
| S13 | -1.251337E-06 | 6.488943E-08 | -2.092451E-09 | 3.801021E-11 | -2.964268E-13 |
| S14 | -2.591624E-06 | 1.105784E-07 | -2.950984E-09 | 4.798589E-11 | -3.808327E-13 |
| S15 | -4.844947E-06 | 1.352528E-07 | -2.459341E-10 | -6.923089E-11 | 1.077327E-12 |
| S16 | -3.211790E-06 | 1.386194E-07 | -3.549405E-09 | 4.956003E-11 | -2.904632E-13 |

FIG. 2B shows the aberration diagram of the optical system 10 of the second embodiment in the short focal state Z1, FIG. 2D shows the aberration diagram of the optical system 10 of the second embodiment in the medium telephoto state Z2, and FIG. 2F shows the aberration diagram of the optical system 10 of the second embodiment in the telephoto state Z3. The detailed information can refer to the first embodiment. From the aberration diagrams in FIGS. 2B, 2D, and 2F, the longitudinal spherical aberration, the field curvature, and the distortion of the optical system 10 have been controlled, such that the optical system 10 of the embodiment has good imaging quality.

Third Embodiment

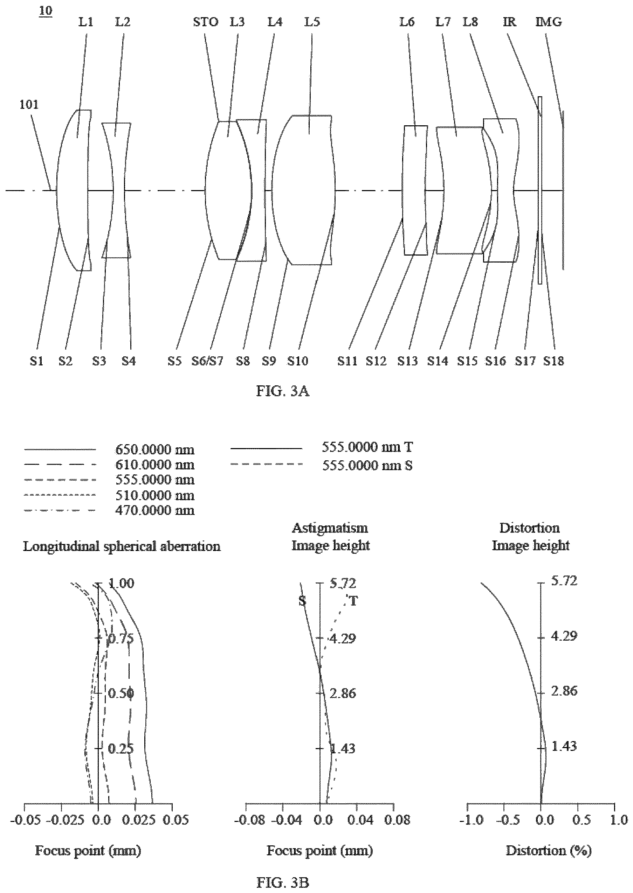

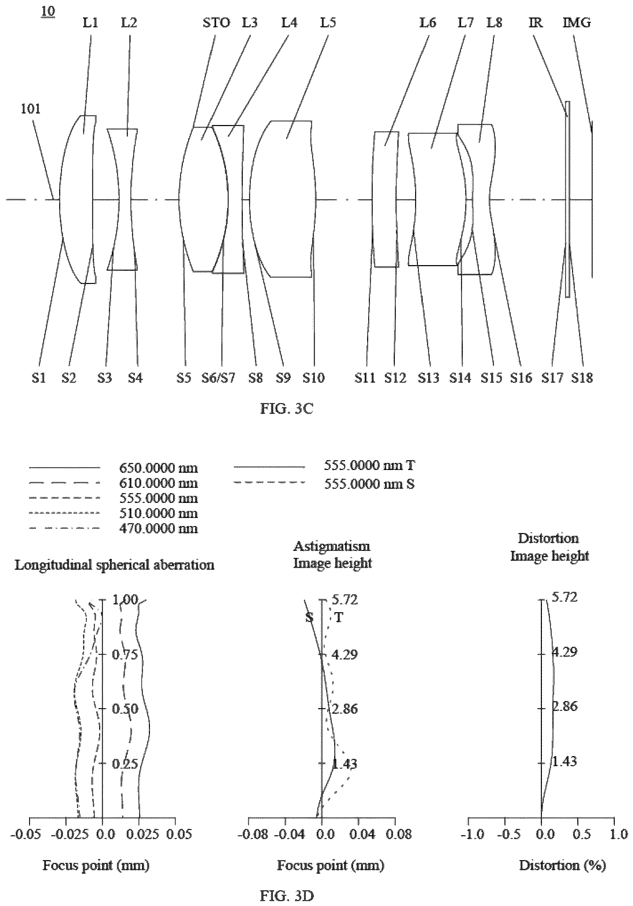

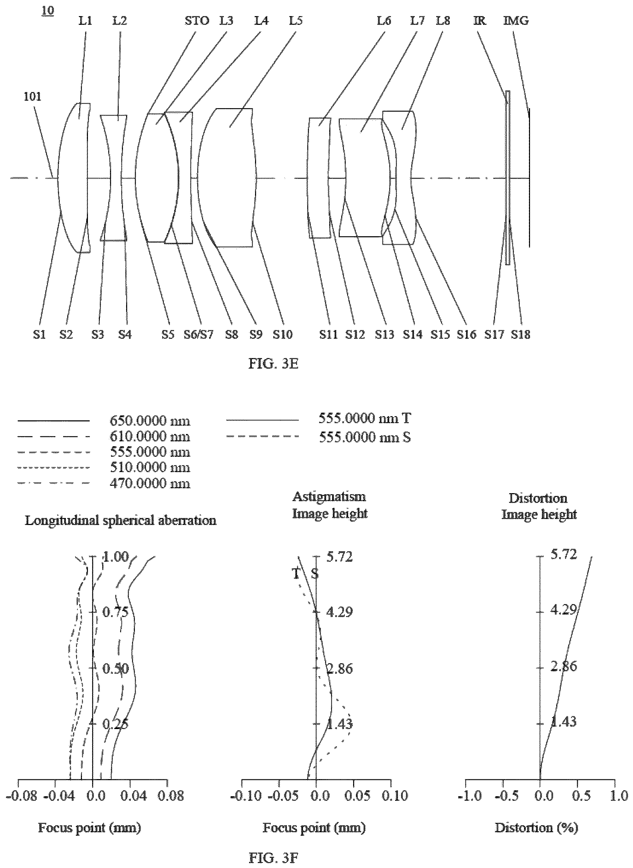

Referring to FIGS. 3A to 3D, the differences between the structures of the third embodiment and the first embodiment include that the refractive power of the sixth lens L6 is negative.

Table 3A

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S1 | first lens L1 | asphere | 16.901 | 2.430 | plastic | 1.588 | 28.400 | 30.265 |
| S2 | | asphere | 288.511 | 1.949 | | | | |
| S3 | second lens L2 | sphere | -15.927 | 0.883 | glass | 1.800 | 46.500 | -12.480 |
| S4 | | sphere | 28.082 | A | | | | |
| S5(STO) | third lens L3 | asphere | 13.341 | 3.595 | glass | 1.678 | 55.600 | 10.112 |
| S6 | cemented surface | sphere | -12.647 | 0.005 | cement | | | |
| S7 | fourth lens L4 | sphere | -12.647 | 1.029 | glass | 1.850 | 30.000 | -13.331 |
| S8 | | sphere | 120.113 | 0.531 | | | | |
| S9 | fifth lens L5 | asphere | 13.386 | 4.890 | plastic | 1.544 | 56.000 | 14.885 |
| S10 | | asphere | -18.010 | B | | | | |
| S11 | sixth lens L6 | asphere | 92.090 | 1.772 | plastic | 1.544 | 56.000 | -200.191 |
| S12 | | asphere | 49.638 | 1.450 | | | | |
| S13 | seventh lens L7 | asphere | -13.972 | 3.675 | plastic | 1.670 | 19.200 | 72.464 |
| S14 | | asphere | -12.032 | 0.479 | | | | |
| S15 | eighth lens L8 | asphere | 14.557 | 1.239 | plastic | 1.544 | 56.000 | -16.185 |
| S16 | | asphere | 5.333 | C | | | | |
| S17 | filter IR | sphere | infinity | 0.300 | glass | 1.510 | 64.000 | - |
| S18 | | sphere | infinity | 1.662 | | | | |
| IMG | imaging plane | sphere | infinity | 0.000 | | | | |

Table 3B

| | FNO | TTL(mm) | FOV(°) | ImgH(mm) | f(mm) | A(mm) | B(mm) | C(mm) |
|---|---|---|---|---|---|---|---|---|
| Short focal state (Z1) | 2.000 | 39.200 | 34.600 | 5.720 | 18.500 | 6.236 | 5.182 | 1.895 |
| Medium telephoto state (Z2) | 2.500 | 39.200 | 26.000 | 5.720 | 24.600 | 3.544 | 4.153 | 5.614 |
| Telephoto state (Z3) | 2.900 | 39.200 | 21.000 | 5.720 | 30.700 | 1.168 | 4.232 | 7.910 |

Table 3C shows the high-order coefficients that applied for the aspherical surfaces in the third embodiment, and the surface shape of each lens is limited by the formula mentioned in the first embodiment.

Table 3C

| Surface numeral | k | A4 | A6 | A8 | A10 |
|---|---|---|---|---|---|
| S1 | 1.134077E-01 | 8.464781E-05 | 3.813780E-07 | 3.358576E-07 | -4.723290E-08 |
| S2 | -3.353937E-13 | 2.809722E-05 | 6.262983E-07 | 2.352728E-07 | -4.107489E-08 |
| S5 | 0.000000E+00 | -3.272688E-05 | -1.120010E-06 | 0.000000E+00 | 0.000000E+00 |
| S9 | -7.672276E+00 | 4.173731E-04 | -8.325811E-07 | -1.783809E-07 | 5.955542E-08 |
| S10 | -1.837692E+01 | -5.401722E-05 | 2.138606E-05 | -2.717400E-06 | 4.260179E-07 |
| S11 | 9.900000E+01 | 3.107769E-04 | -1.139815E-05 | -4.107966E-07 | 3.835827E-08 |
| S12 | 1.561939E+01 | 1.504025E-04 | -1.610142E-05 | -1.980262E-06 | 1.526624E-07 |
| S13 | 4.065791E+00 | 6.742197E-04 | 3.061924E-06 | -3.843481E-06 | 3.113485E-07 |
| S14 | 2.508964E+00 | -2.625736E-03 | 8.874169E-04 | -1.494359E-04 | 1.688367E-05 |
| S15 | -6.536150E+01 | -1.143863E-02 | 1.782846E-03 | -2.470289E-04 | 2.495526E-05 |
| S16 | -8.178300E+00 | -5.595390E-03 | 7.276023E-04 | -8.632546E-05 | 7.709783E-06 |
| Surface numeral | A12 | A14 | A16 | A18 | A20 |
| S1 | 4.188567E-09 | -2.143523E-10 | 6.435008E-12 | -1.047118E-13 | 7.212886E-16 |
| S2 | 4.944902E-09 | -3.311482E-10 | 1.268311E-11 | -2.582535E-13 | 2.192250E-15 |
| S5 | 0.000000E+00 | 0.000000E+00 | 0.000000E+00 | 0.000000E+00 | 0.000000E+00 |
| S9 | -5.601741E-09 | 3.043818E-10 | -9.631677E-12 | 1.655002E-13 | -1.190463E-15 |
| S10 | -4.144078E-08 | 2.508083E-09 | -9.062343E-11 | 1.792110E-12 | -1.483083E-14 |
| S11 | -7.513512E-10 | 0.000000E+00 | 0.000000E+00 | 0.000000E+00 | 0.000000E+00 |
| S12 | -2.599414E-09 | 0.000000E+00 | 0.000000E+00 | 0.000000E+00 | 0.000000E+00 |
| S13 | 2.129260E-09 | -1.113025E-09 | 5.690839E-11 | -1.264846E-12 | 1.031423E-14 |
| S14 | -1.310356E-06 | 7.006304E-08 | -2.466615E-09 | 5.116683E-11 | -4.669659E-13 |
| S15 | -1.787399E-06 | 9.030783E-08 | -3.103949E-09 | 6.488393E-11 | -6.108621E-13 |
| S16 | -4.827466E-07 | 2.040736E-08 | -5.552378E-10 | 8.774469E-12 | -6.111900E-14 |

FIG. 3B shows the aberration diagram of the optical system 10 of the third embodiment in the short focal state Z1, FIG. 3D shows the aberration diagram of the optical system 10 of the third embodiment in the medium telephoto state Z2, and FIG. 3F shows the aberration diagram of the optical system 10 of the third embodiment in the telephoto state Z3. The detailed information can refer to the first embodiment. From the aberration diagrams in FIGS. 3B, 3D, and 3F, the longitudinal spherical aberration, the field curvature, and the distortion of the optical system 10 have been controlled, such that the optical system 10 of the embodiment has good imaging quality.

Fourth embodiment

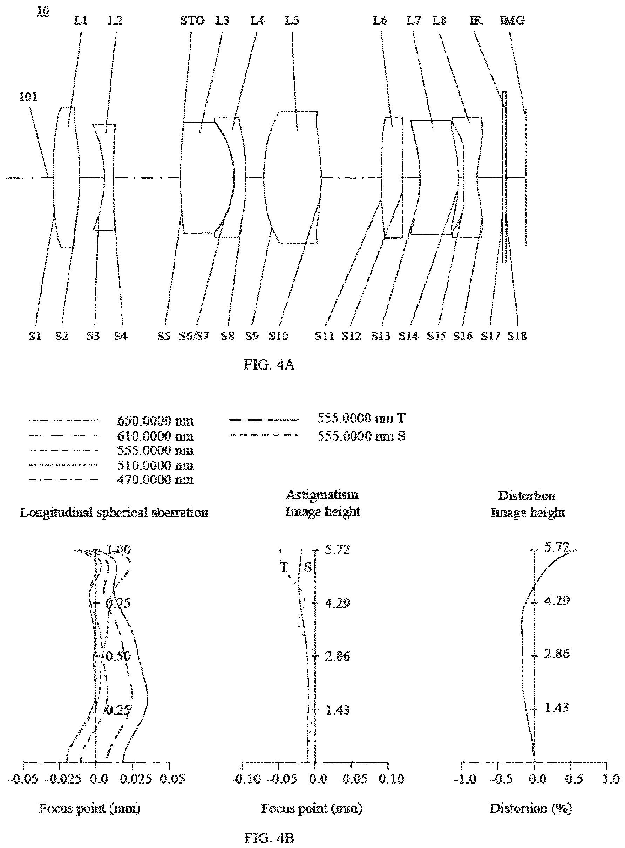

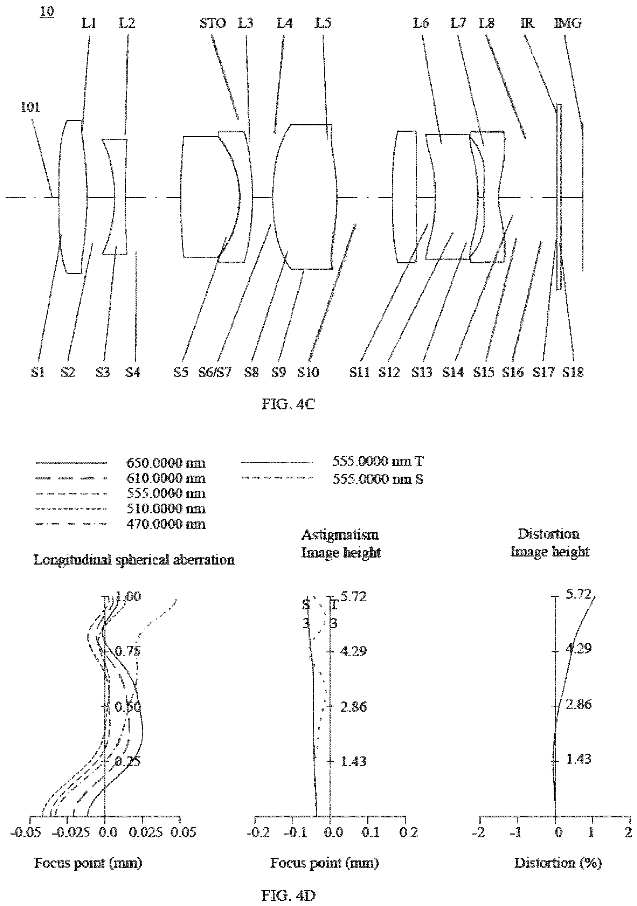

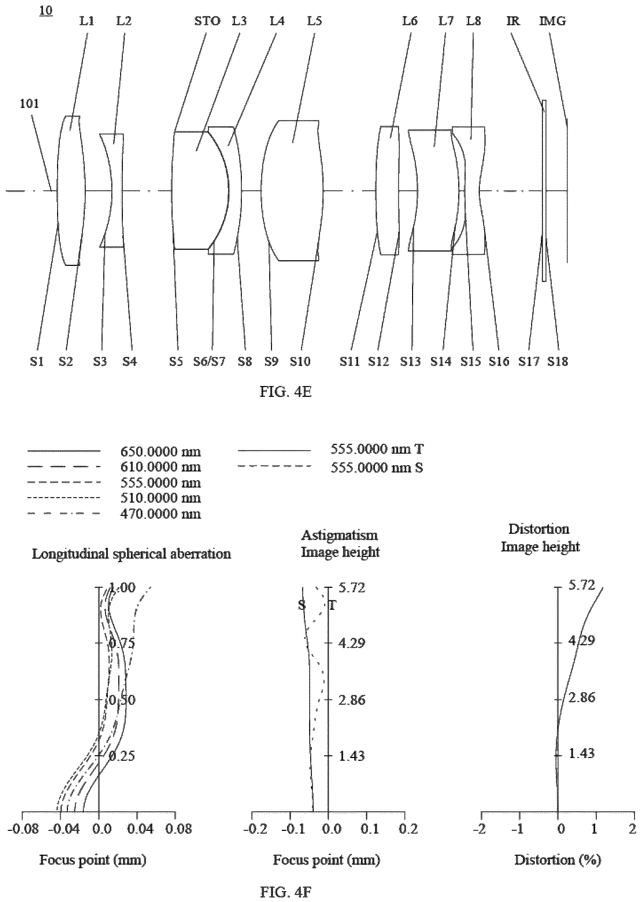

Referring to FIGS. 4A to 4F, the differences between the structures of the fourth embodiment and the first embodiment include that the image side surface S2 of the first lens L1 is convex near the optical axis, the image side surface S8 of the fourth lens L4 is convex near the optical axis, and the refractive power of the seventh lens L7 is negative.

Table 4A

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S1 | first lens L1 | asphere | 55.754 | 2.190 | plastic | 1.588 | 28.400 | 28.326 |

(continued)

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S2 | | asphere | -23.587 | 2.102 | | | | |
| S3 | second lens L2 | sphere | -10.916 | 0.800 | glass | 1.800 | 46.500 | -12.053 |
| S4 | | sphere | 92.403 | A | | | | |
| S5(STO) | third lens L3 | asphere | 44.110 | 4.479 | glass | 1.678 | 55.600 | 9.749 |
| S6 | cemented surface | sphere | -7.482 | 0.005 | cement | | | |
| S7 | fourth lens L4 | sphere | -7.482 | 1.000 | glass | 1.850 | 30.000 | -14.380 |
| S8 | | sphere | -20.287 | 1.526 | | | | |
| S9 | fifth lens L5 | asphere | 15.221 | 4.874 | plastic | 1.544 | 56.000 | 15.513 |
| S10 | | asphere | -16.932 | B | | | | |
| S11 | sixth lens L6 | asphere | 71.703 | 1.781 | plastic | 1.544 | 56.000 | 1548.637 |
| S12 | | asphere | 77.660 | 1.482 | | | | |
| S13 | seventh lens L7 | asphere | -12.405 | 3.242 | plastic | 1.670 | 19.200 | -713.539 |
| S14 | | asphere | -14.075 | 0.451 | | | | |
| S15 | eighth lens L8 | asphere | 13.134 | 1.141 | plastic | 1.544 | 56.000 | -18.401 |
| S16 | | asphere | 5.517 | C | | | | |
| S17 | filter IR | sphere | infinity | 0.300 | glass | 1.510 | 64.000 | - |
| S18 | | sphere | infinity | 1.662 | | | | |
| IMG | imaging plane | sphere | infinity | 0.000 | | | | |

Table 4B

| | FNO | TTL(mm) | FOV(°) | ImgH(mm) | f(mm) | A(mm) | B(mm) | C(mm) |
|---|---|---|---|---|---|---|---|---|
| Short focal state (Z1) | 2.200 | 40.000 | 39.000 | 5.720 | 16.100 | 5.698 | 5.071 | 2.183 |
| Medium telephoto state (Z2) | 2.500 | 40.000 | 33.200 | 5.720 | 18.900 | 4.242 | 4.256 | 4.452 |
| Telephoto state (Z3) | 2.900 | 40.000 | 32.000 | 5.720 | 19.600 | 3.885 | 4.127 | 4.941 |

Table 4C shows the high-order coefficients that applied for the aspherical surfaces in the fourth embodiment, and the surface shape of each lens is limited by the formula mentioned in the first embodiment.

Table 4C

| Surface numeral | k | A4 | A6 | A8 | A10 |
|---|---|---|---|---|---|
| S1 | 5.027056E+01 | 1.344057E-04 | -6.613175E-06 | 1.312633E-06 | -1.265383E-07 |
| S2 | -6.376317E+00 | 1.184484E-04 | -1.836870E-05 | 3.848205E-06 | -4.506893E-07 |

(continued)

| Surface numeral | k | A4 | A6 | A8 | A10 |
|---|---|---|---|---|---|
| S5 | 0.000000E+00 | -5.056773E-05 | 6.134906E-08 | 0.000000E+00 | 0.000000E+00 |
| S9 | -7.150696E+00 | 3.677378E-04 | 1.033828E-05 | -1.158172E-06 | 1.245798E-07 |
| S10 | -1.741326E+01 | -1.656562E-04 | 2.550524E-05 | -1.045014E-07 | -1.391925E-07 |
| S11 | 9.900000E+01 | -1.905881E-04 | 1.134884E-04 | -9.208279E-06 | 3.093171E-07 |
| S12 | -9.900000E+01 | -8.217632E-04 | 1.993443E-04 | -2.099915E-05 | 8.765692E-07 |
| S13 | 3.938416E+00 | 6.864588E-04 | 1.007130E-04 | -3.312322E-05 | 4.151573E-06 |
| S14 | 3.505668E+00 | -1.386340E-03 | 1.066074E-03 | -2.613498E-04 | 3.241298E-05 |
| S15 | -3.702872E+01 | -1.000551E-02 | 2.234966E-03 | -4.094753E-04 | 3.601219E-05 |
| S16 | -9.200100E+00 | -4.809888E-03 | 1.025715E-03 | -1.955489E-04 | 2.219943E-05 |
| Surface numeral | A12 | A14 | A16 | A18 | A20 |
| S1 | 7.720447E-09 | -2.985042E-10 | 7.225531E-12 | -1.001346E-13 | 6.174905E-16 |
| S2 | 3.273672E-08 | -1.489492E-09 | 4.163082E-11 | -6.548454E-13 | 4.467881E-15 |
| S5 | 0.000000E+00 | 0.000000E+00 | 0.000000E+00 | 0.000000E+00 | 0.000000E+00 |
| S9 | -8.411953E-09 | 3.584715E-10 | -9.191846E-12 | 1.301208E-13 | -7.788035E-16 |
| S10 | 1.793207E-08 | -1.150720E-09 | 4.221872E-11 | -8.351960E-13 | 6.984510E-15 |
| S11 | -3.783293E-09 | 0.000000E+00 | 0.000000E+00 | 0.000000E+00 | 0.000000E+00 |
| S12 | -1.279491E-08 | 0.000000E+00 | 0.000000E+00 | 0.000000E+00 | 0.000000E+00 |
| S13 | -2.918449E-07 | 1.323579E-08 | -3.813097E-10 | 6.306268E-12 | -4.587591E-14 |
| S14 | -2.315731E-06 | 1.020780E-07 | -2.846768E-09 | 4.857366E-11 | -4.011629E-13 |
| S15 | -9.268775E-07 | -7.508945E-08 | 6.558470E-09 | -1.915806E-10 | 2.018205E-12 |
| S16 | -1.493207E-06 | 6.041671E-08 | -1.442039E-09 | 1.868444E-11 | -1.012702E-13 |

FIG. 4B shows the aberration diagram of the optical system 10 of the fourth embodiment in the short focal state Z1, FIG. 4D shows the aberration diagram of the optical system 10 of the fourth embodiment in the medium telephoto state Z2, and FIG. 4F shows the aberration diagram of the optical system 10 of the fourth embodiment in the telephoto state Z3. The detailed information can refer to the first embodiment. From the aberration diagrams in FIGS. 4B, 4D, and 4F, the longitudinal spherical aberration, the field curvature, and the distortion of the optical system 10 have been controlled, such that the optical system 10 of the embodiment has good imaging quality.

Fifth embodiment

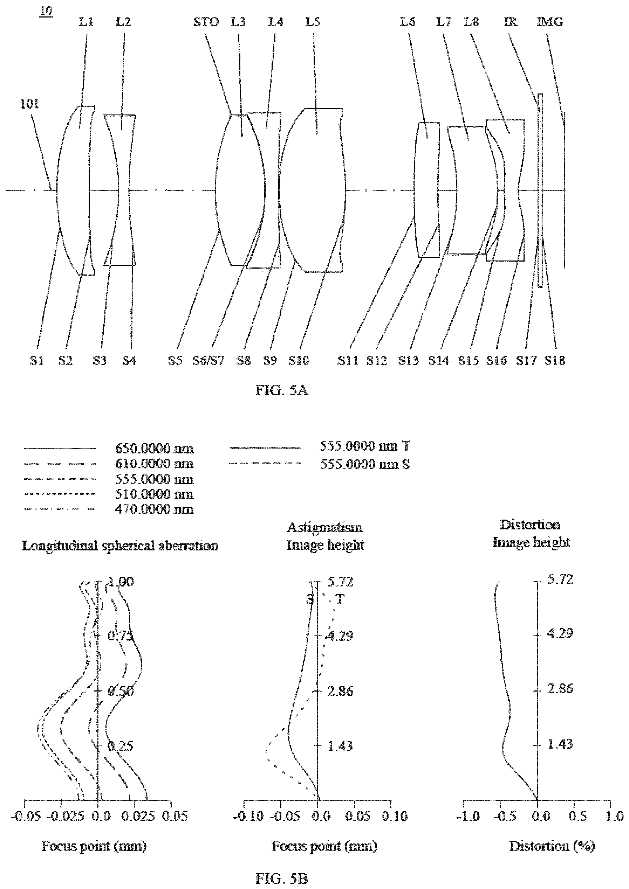

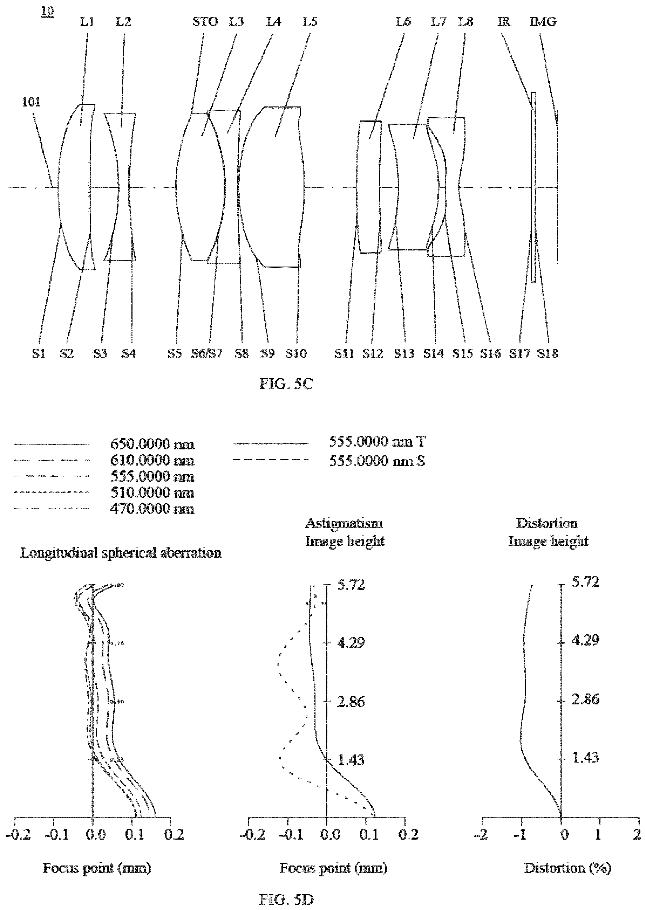

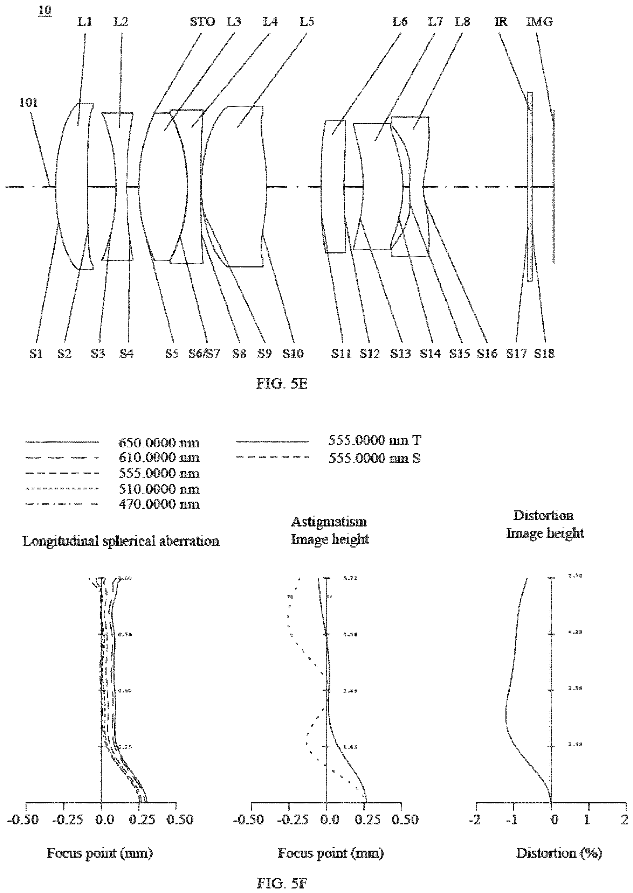

Referring to FIGS. 5A to 5F, the differences between the structures of the fifth embodiment and the first embodiment include that the refractive power of the sixth lens L6 is negative.

Table 5A

| Surface numeral | Name | Surface type | Y radius (mm) | Thickness (mm) | Material | Refractive index | Abbe number | Focal length (mm) |
|---|---|---|---|---|---|---|---|---|
| | Object side | sphere | infinity | infinity | | | | |
| S1 | first lens L1 | asphere | 17.220 | 2.421 | plastic | 1.588 | 28.400 | 31.680 |
| S2 | | asphere | 202.559 | 2.173 | | | | |
| S3 | second lens L2 | sphere | -15.014 | 0.800 | glass | 1.800 | 46.500 | -12.582 |

(continued)

| Surface numeral | Name | Surface type | Y radius (mm) | Thickness (mm) | Material | Refractive index | Abbe number | Focal length (mm) |
|---|---|---|---|---|---|---|---|---|
|  | Object side | sphere | infinity | infinity |  |  |  |  |
| S4 |  | sphere | 32.131 | A |  |  |  |  |
| S5(STO) | third lens L3 | asphere | 13.056 | 3.715 | glass | 1.678 | 55.600 | 9.947 |
| S6 | cemented surface | sphere | -12.422 | 0.005 | cement |  |  |  |
| S7 | **fourth** lens L4 | sphere | -12.422 | 1.000 | glass | 1.850 | 30.000 | -12.907 |
| S8 |  | sphere | 102.772 | 0.050 |  |  |  |  |
| S9 | fifth lens L5 | asphere | 12.930 | 4.978 | plastic | 1.544 | 56.000 | 14.208 |
| S10 |  | asphere | -16.752 | B |  |  |  |  |
| S11 | sixth lens L6 | asphere | 66.639 | 1.749 | plastic | 1.544 | 56.000 | 234.88 2 |
| S12 |  | asphere | 43.444 | 1.433 |  |  |  |  |
| S13 | seventh lens L7 | asphere | -12.972 | 3.045 | plastic | 1.670 | 19.200 | 54.535 |
| S14 |  | asphere | -10.512 | 0.511 |  |  |  |  |
| S15 | eighth lens L8 | asphere | 9.632 | 1.040 | plastic | 1.544 | 56.000 | -12.472 |
| S16 |  | asphere | 3.837 | C |  |  |  |  |
| S17 | filter IR | sphere | infinity | 0.300 | glass | 1.510 | 64.000 | - |
| S18 |  | sphere | infinity | 1.662 |  |  |  |  |
| IMG | imaging plane | sphere | infinity | 0.000 |  |  |  |  |

Table 5B

|  | FNO | TTL(mm) | FOV(°) | ImgH(mm) | f(mm) | A(mm) | B(mm) | C(mm) |
|---|---|---|---|---|---|---|---|---|
| Short focal state (Z1) | 1.900 | 37.950 | 36.400 | 5.720 | 17.500 | 6.431 | 5.142 | 1.484 |
| Medium telephoto state (Z2) | 2.400 | 37.950 | 26.300 | 5.720 | 24.900 | 3.565 | 3.978 | 5.512 |
| Telephoto state (Z3) | 2.800 | 37.950 | 20.400 | 5.720 | 32.500 | 0.929 | 4.142 | 7.984 |

Table 5C shows the high-order coefficients that applied for the aspherical surfaces in the fourth embodiment, and the surface shape of each lens is limited by the formula mentioned in the first embodiment.

Table 5C

| Surface numeral | k | A4 | A6 | A8 | A10 |
|---|---|---|---|---|---|
| S1 | 1.313726E-01 | 1.377641E-04 | -2.391413E-05 | 5.220392E-06 | -5.770035E-07 |
| S2 | -9.850511E+01 | -3.270553E-05 | 6.465166E-06 | 1.605572E-06 | -3.905675E-07 |
| S5 | 0.000000E+00 | -3.835721E-05 | -1.167966E-06 | 0.000000E+00 | 0.000000E+00 |
| S9 | -7.329075E+00 | 4.188334E-04 | 1.221470E-07 | -1.202795E-07 | 2.924408E-08 |

(continued)

| Surface numeral | k | A4 | A6 | A8 | A10 |
|---|---|---|---|---|---|
| S10 | -1.711157E+01 | -7.795059E-06 | -1.137969E-05 | 5.515413E-06 | -7.614913E-07 |
| S11 | 9.898967E+01 | 3.018683E-04 | -1.786809E-05 | -4.732763E-08 | 5.859962E-08 |
| S12 | -4.046626E+01 | 2.553672E-04 | -5.640294E-05 | -4.358352E-07 | 2.057928E-07 |
| S13 | 4.204622E+00 | 1.252781E-03 | -1.195837E-04 | 7.813966E-06 | -6.924012E-07 |
| S14 | 2.485841E+00 | -3.449871E-03 | 1.435454E-03 | -3.146404E-04 | 4.490333E-05 |
| S15 | -7.051379E+01 | -1.714881E-02 | 2.917575E-03 | -4.682452E-04 | 5.768178E-05 |
| S16 | -1.320525E+01 | -2.919362E-03 | -1.976456E-04 | 7.699765E-05 | -9.497048E-06 |
| Surface numeral | A12 | A14 | A16 | A18 | A20 |
| S1 | 3.823959E-08 | -1.548639E-09 | 3.766481E-11 | -5.049874E-13 | 2.875360E-15 |
| S2 | 3.899609E-08 | -2.123660E-09 | 6.616105E-11 | -1.107592E-12 | 7.755779E-15 |
| S5 | 0.000000E+00 | 0.000000E+00 | 0.000000E+00 | 0.000000E+00 | 0.000000E+00 |
| S9 | -2.037823E-09 | 8.795972E-11 | -2.234369E-12 | 3.078273E-14 | -1.733113E-16 |
| S10 | 6.388971E-08 | -3.319020E-09 | 1.051792E-10 | -1.861513E-12 | 1.418989E-14 |
| S11 | -1.472770E-09 | 0.000000E+00 | 0.000000E+00 | 0.000000E+00 | 0.000000E+00 |
| S12 | -5.181663E-09 | 0.000000E+00 | 0.000000E+00 | 0.000000E+00 | 0.000000E+00 |
| S13 | 8.658281E-08 | -6.373051E-09 | 2.610391E-10 | -5.637264E-12 | 4.983696E-14 |
| S14 | -4.208444E-06 | 2.579731E-07 | -9.949579E-09 | 2.186217E-10 | -2.075976E-12 |
| S15 | -4.936818E-06 | 2.816317E-07 | -1.025514E-08 | 2.166147E-10 | -2.019210E-12 |
| S16 | 6.873293E-07 | -3.150139E-08 | 8.943839E-10 | -1.425372E-11 | 9.668977E-14 |

FIG. 5B shows the aberration diagram of the optical system 10 of the fifth embodiment in the short focal state Z1, FIG. 5D shows the aberration diagram of the optical system 10 of the fifth embodiment in the medium telephoto state Z2, and FIG. 5F shows the aberration diagram of the optical system 10 of the fifth embodiment in the telephoto state Z3. The detailed information can refer to the first embodiment. From the aberration diagrams in FIGS. 5B, 5D, and 5F, the longitudinal spherical aberration, the field curvature, and the distortion of the optical system 10 have been controlled, such that the optical system 10 of the embodiment has good imaging quality.

Table 6 shows the values of multiple relationships in the optical systems of the first to fifth embodiments.

Table 6

| Formula | First embodiment | Second embodiment | Third embodiment | Fourth embodiment | Fifth embodiment |
|---|---|---|---|---|---|
| f1/fmax | 0.993 | 1.336 | 0.986 | 1.445 | 0.975 |
| f2/fmax | -0.409 | -0.571 | -0.407 | -0.615 | -0.387 |
| f3/fmax | 0.337 | 0.469 | 0.329 | 0.497 | 0.306 |
| f4/fmax | -0.441 | -0.703 | -0.434 | -0.734 | -0.397 |
| f5/fmax | 0.490 | 0.751 | 0.485 | 0.791 | 0.437 |
| f6/fmax | 37.619 | -18.484 | -6.521 | 79.012 | -7.227 |
| f7/fmax | 3.054 | 13.188 | 2.360 | -36.405 | 1.678 |
| f8/fmax | -0.512 | -0.871 | -0.527 | -0.939 | -0.384 |
| R1/fmax | 0.576 | 3.123 | 0.551 | 2.845 | 0.530 |
| R2/fmax | 30.041 | -1.044 | 9.398 | -1.203 | 6.233 |
| R3/fmax | -0.519 | -0.541 | -0.519 | -0.557 | -0.462 |

(continued)

| Formula | First embodiment | Second embodiment | Third embodiment | Fourth embodiment | Fifth embodiment |
|---|---|---|---|---|---|
| R4/fmax | 0.926 | 3.257 | 0.915 | 4.714 | 0.989 |
| R5/fmax | 0.439 | 2.384 | 0.435 | 2.251 | 0.402 |
| R6/fmax | -0.417 | -0.354 | -0.412 | -0.382 | -0.382 |
| R7/fmax | -0.417 | -0.354 | -0.412 | -0.382 | -0.382 |
| R8/fmax | 4.066 | -0.919 | 3.912 | -1.035 | 3.162 |
| R9/fmax | 0.440 | 0.736 | 0.436 | 0.777 | 0.398 |
| R10/fmax | -0.595 | -0.821 | -0.587 | -0.864 | -0.515 |
| R11/fmax | 3.054 | 3.752 | 3.000 | 3.658 | 2.050 |
| R12/fmax | 3.563 | 2.713 | 1.617 | 3.962 | 1.337 |
| R13/fmax | -0.395 | -0.640 | -0.455 | -0.633 | -0.399 |
| R14/fmax | -0.374 | -0.652 | -0.392 | -0.718 | -0.323 |
| R15/fmax | 0.616 | 1.075 | 0.474 | 0.670 | 0.296 |
| R16/fmax | 0.187 | 0.324 | 0.174 | 0.281 | 0.118 |
| f12/fmax | -0.87 | -1.21 | -0.88 | -1.27 | -0.81 |
| f345/fmax | 0.39 | 0.54 | 0.38 | 0.57 | 0.34 |
| f678/fmax | -0.56 | -0.82 | -0.56 | -0.85 | -0.43 |
| fmax/fmin | 1.631 | 1.284 | 1.659 | 1.217 | 1.857 |
| f12/f345 | -2.255 | -2.230 | -2.329 | -2.214 | -2.363 |
| f12/f678 | 1.561 | 1.480 | 1.575 | 1.502 | 1.887 |
| FOVmax/FOVm in | 1.633 | 1.294 | 1.648 | 1.219 | 1.784 |
| FOVmax | 34.300 | 38.300 | 34.600 | 39.000 | 36.400 |
| FOVmin | 21.000 | 29.600 | 21.000 | 32.000 | 20.400 |
| FNOmax/FNOm in | 1.364 | 1.364 | 1.450 | 1.318 | 1.474 |
| FNOmax | 3.000 | 3.000 | 2.900 | 2.900 | 2.800 |
| FNOmin | 2.200 | 2.200 | 2.000 | 2.200 | 1.900 |
| TTL/ImgH | 7.010 | 7.133 | 6.853 | 6.993 | 6.635 |
| Yc82/SD82 | 0.627 | 0.742 | 0.652 | 0.680 | 0.632 |
| SDmax/ImgH | 1.014 | 1.014 | 1.080 | 1.036 | 1.103 |
| GL2/GL1 | 2.114 | 2.137 | 1.910 | 2.334 | 1.807 |
| GL2/GL3 | 1.249 | 1.569 | 1.167 | 1.468 | 1.254 |
| TDmax/TDmin | 1.189 | 1.106 | 1.205 | 1.083 | 1.232 |
| ΔA | 4.941 | 2.503 | 5.068 | 1.812 | 5.502 |
| ΔC | 5.739 | 3.501 | 6.015 | 2.758 | 6.500 |
| ΔA/ΔC | 0.8609 | 0.7149 | 0.8425 | 0.6571 | 0.8465 |
| CT1/CT2 | 2.745 | 1.8708 | 2.7536 | 2.7371 | 3.0246 |
| CT3/CT4 | 4.3488 | 4.3452 | 3.4924 | 4.4781 | 3.7155 |
| CT5/CT4 | 4.8745 | 4.7477 | 4.7514 | 4.8728 | 4.9783 |
| CT7/CT6 | 2.1491 | 1.6996 | 2.0741 | 1.8204 | 1.7413 |

(continued)

| Formula | First embodiment | Second embodiment | Third embodiment | Fourth embodiment | Fifth embodiment |
|---|---|---|---|---|---|
| CT7/CT8 | 2.8958 | 3.023 | 2.965 | 2.8422 | 2.9279 |

The optical systems of the above embodiments have the characteristics of continuous zooming and high imaging quality.

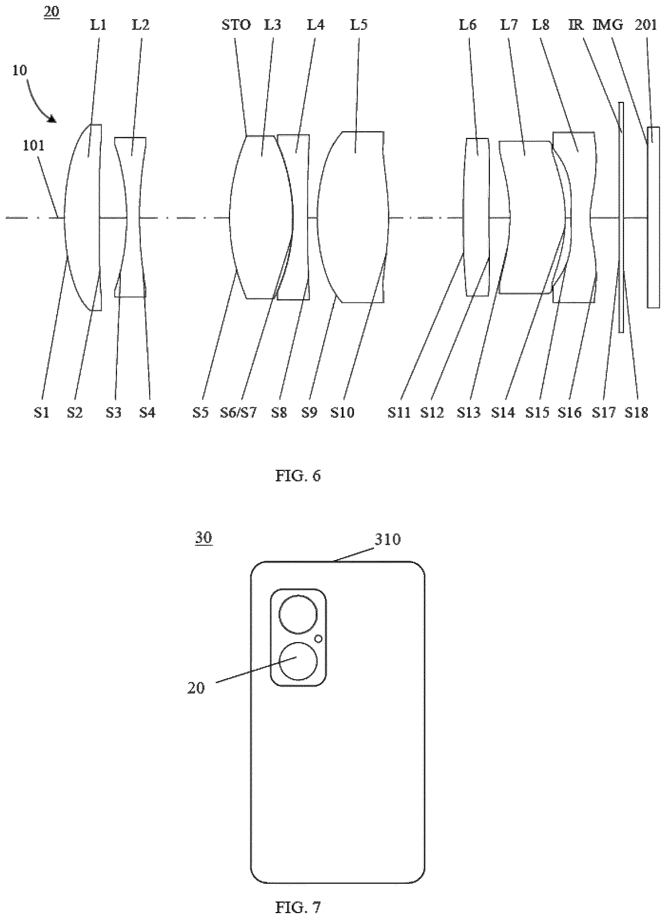

Referring to FIG. 6, a camera module 20 is further provided according to an embodiment of the present disclosure. The camera module 20 includes the optical system 10 as mentioned in any above embodiment and a photosensitive chip 201. The photosensitive chip 201 is located on the image side of the optical system 10, and may be fixed to the optical system 10 by a bracket. The photosensitive chip 201 may be a complementary metal oxide semiconductor (CMOS) or a charge coupled device (CCD). Generally, the imaging surface IMG of the optical system 10 overlaps with the photosensitive surface of the photosensitive chip 201 after assembly. By incorporating the optical system 10 into the camera module 20, the camera module 20 has the characteristics of continuous zooming and high imaging quality.

Referring to FIG. 7, an electronic device 30 is further provided according to an embodiment of the present disclosure. The electronic device 30 includes a housing 310 and the camera module 20 as mentioned above. The camera module 20 is mounted to the housing 310. The housing 310 may be a display screen, a circuit board, a middle frame, a back cover, and any other component. The electronic device 30 may be a smartphone, a smartwatch, a smart glass, an e-book reader, a tablet computer, a biometric device, or a PDA. Due to the continuous zooming and high imaging quality characteristics of the camera module 20, the camera module 20 may be assembled into a smaller space inside the electronic device 30, thereby reducing the thickness of the electronic device 30 and increasing the zooming speed.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system (10), **characterized by** consisting of eight lenses having refractive power, from an object side to an image side along an optical axis (101) of the optical system (10), the eight lenses sequentially comprising a first lens (L1), a second lens (L2), a third lens (L3), a fourth lens (L4), a fifth lens (L5), a sixth lens (L6), a seventh lens (L7), and an eighth lens (L8), wherein,

    the first lens (L1) and the second lens (L2) form a first lens group with negative refractive power;
    the third lens (L3) to the fifth lens (L5) form a second lens group with positive refractive power;
    the sixth lens (L6) to the eighth lens (L8) form a third lens group having negative refractive power;
    the first lens group is fixed relative to an imaging plane (IMG) of the optical system (10), and each of the second lens group and the third lens group is configured to move along the optical axis (101) between the first lens group and the imaging plane (IMG) to realize zooming capability of the optical system (10);
    the optical system (10) satisfies following relationships:

    $$1 < fmax/fmin < 2.1;$$

    $$-1.5 < f12/fmax < -0.5;$$

    $$0.25 < f345/fmax < 0.8;$$

    and

    $$-1.1 < f678/fmax < -0.3,$$

    wherein, fmax is a maximum focal length of the optical system (10), fmin is a minimum focal length of the optical system (10), f12 is a combined focal length of the first lens (L1) to the second lens (L2), f345 is a combined focal length of the third lens (L3) to the fifth lens (L5), and f678 is a combined focal length of the sixth lens (L6) to the eighth lens (L8).

2. The optical system (10) according to claim 1, **characterized in that**, the optical system (10) further satisfies at least one of following relationships:

$$1<FOVmax/FOVmin<2.1;$$

$$30<FOVmax<45;$$

and

$$16<FOVmin<36$$

wherein, FOVmax is a maximum field of view of the optical system (10), and FOVmin is a minimum field of view of the optical system (10).

3. The optical system (10) according to claim 1 or 2, **characterized in that**, the optical system (10) further satisfies at least one of following relationships:

$$1<FNOmax/FNOmin<1.8;$$

$$2.4<FNOmax<3.4;$$

and

$$1.5<FNOmin<2.6,$$

wherein, FNOmax is a maximum F-number of the optical system (10), and FNOmin is a minimum F-number of the optical system (10).

4. The optical system (10) according to any one of claims 1 to 3, **characterized in that**, the optical system (10) further satisfies at least one of following relationships:

$$-1.9<f12/f345<-2.7;$$

and

$$1.2<f12/f678<2.1.$$

5. The optical system (10) according to any one of claims 1 to 4, **characterized in that**, the optical system (10) further satisfies at least one of following relationships:

$$5<TTL/ImgH<9;$$

and

$$0.8<SDmax/ImgH<1.3,$$

wherein, TTL is a distance from an object side surface of the first lens (L1) to the imaging plane (IMG) at the optical axis (101), ImgH is half of an image height corresponding to a maximum field of view of the optical system (10), and SDmax is a maximum effective half-aperture from the object side surface of the first lens (L1) to an image side surface of the eighth lens (L8).

6. The optical system (10) according to any one of claims 1 to 5, **characterized in that**, the optical system (10) further satisfies following relationship:

$$0.3<Yc82/SD82<0.9,$$

wherein, Yc82 is a vertical height from an off-axis vertex of an image side surface of the eighth lens (L8) to the optical axis (101), and SD82 is an effective half-aperture of the image side surface of the eighth lens (L8).

7. The optical system (10) according to any one of claims 1 to 6, **characterized in that**, the optical system (10) further satisfies at least one of following relationships:

$$1.5<GL2/GL1<2.7;$$

and

$$0.9<GL2/GL3<1.8,$$

wherein, GL1 is a distance between the object side surface of the first lens (L1) and the image side surface of the second lens (L2) at the optical axis (101), GL2 is a distance between an object side surface of the third lens (L3) and an image side surface of the fifth lens (L5) at the optical axis (101), and GL3 is a distance between an object side surface of the sixth lens (L6) and the image side surface of the eighth lens (L8) at the optical axis (101).

8. The optical system (10) according to any one of claims 1 to 7, **characterized in that**, the optical system (10) further satisfies following relationship:

$$1<TDmax/TDmin<1.5,$$

wherein, TDmax is a maximum distance between the object side surface of the first lens (L1) and the image side surface of the eighth lens (L8) at the optical axis (101), TDmin is minimum distance between the object side surface of the first lens (L1) and the image side surface of the eighth lens (L8) at the optical axis (101).

9. The optical system (10) according to any one of claims 1 to 8, **characterized in that**, the optical system (10) further satisfies following relationship:

$$0.5<\Delta A/\Delta C<1.1,$$

wherein, $\Delta A$ is a maximum stroke of the second lens group at the optical axis (101), and $\Delta C$ is a maximum stroke of the third lens group at the optical axis (101).

10. The optical system (10) according to any one of claims 1 to 9, **characterized in that**,

the first lens (L1) has positive refractive power, and an object side surface of the first lens (L1) is convex near the optical axis (101);
the second lens (L2) has negative refractive power, an object side surface of the second lens (L2) is concave near the optical axis (101), and an image side surface of the second lens (L2) is concave near the optical axis (101);
the third lens (L3) has positive refractive power, an object side surface of the third lens (L3) is convex near the optical axis (101), and an image side surface of the third lens (L3) is convex near the optical axis (101);
the fourth lens (L4) has negative refractive power, and an object side surface of the fourth lens (L4) is concave near the optical axis (101);
the fifth lens (L5) has positive refractive power, an object side surface of the fifth lens (L5) is convex near the optical axis (101), and an image side surface of the fifth lens (L5) is convex near the optical axis (101);
the sixth lens (L6) has refractive power, an object side surface of the sixth lens (L6) is convex near the optical axis (101), and an image side surface of the sixth lens (L6) is concave near the optical axis (101);

the seventh lens (L7) has refractive power, an object side surface of the seventh lens (L7) is concave near the optical axis (101), and an image side surface of the seventh lens (L7) is convex near the optical axis (101); and the eighth lens (L8) has negative refractive power, an object side surface of the eight lens is convex near the optical axis (101), and an image side surface of the eighth lens (L8) is concave near the optical axis (101).

11. The optical system (10) according to any one of claims 1 to 10, **characterized in that**, the optical system (10) further satisfies at least one of following relationships:

$$0.7<f1/fmax<1.7;$$

$$-0.8<f2/fmax<-0.2;$$

$$0.2<f3/fmax<0.7;$$

$$-0.8<f4/fmax<-0.2;$$

$$0.25<f5/fmax<1;$$

and

$$1.2<f8/fmax<-0.25,$$

wherein, f1 is a focal length of the first lens (L1), f2 is a focal length of the second lens (L2), f3 is a focal length of the third lens (L3), f4 is a focal length of the fourth lens (L4), f5 is a focal length of the fifth lens (L5), and f8 is a focal length of the eighth lens (L8).

12. The optical system (10) according to any one of claims 1 to 11, **characterized in that**, the optical system (10) further satisfies at least one of following relationships:

$$0.4<R1/fmax;$$

$$0.7<R4/fmax;$$

$$0.2<R5/fmax;$$

$$-0.6<R6/fmax<-0.2;$$

$$0.3<R9/fmax<1;$$

$$-1.1<R10/fmax<-0.3;$$

$$1.5<R11/fmax;$$

$$1<R12/fmax;$$

$$-0.9<R13/fmax<-0.3;$$

$$-0.9<R14/fmax<-0.2;$$

$$0.2<R15/fmax<1.4;$$

and

$$0<R16/fmax<0.4,$$

wherein, R1 is a radius of curvature of an object side surface of the first lens (L1) at the optical axis (101), R4 is a radius of curvature of an image side surface of the second lens (L2) at the optical axis (101), R5 is a radius of curvature of an object side surface of the third lens (L3) at the optical axis (101), R6 is a radius of curvature of an image side surface of the third lens (L3) at the optical axis (101), R9 is a radius of curvature of an object side surface of the fifth lens (L5) at the optical axis (101), R10 is a radius of curvature of an image side surface of the fifth lens (L5) at the optical axis (101), R11 is a radius of curvature of an object side surface of the sixth lens (L6) at the optical axis (101), R12 is a radius of curvature of an object side surface of the sixth lens (L6) at the optical axis (101), R13 is a radius of curvature of an object side surface of the seventh lens (L7) at the optical axis (101), R14 is a radius of curvature of an image side surface of the seventh lens (L7) at the optical axis (101), R15 is a radius of curvature of an object side surface of the eighth lens (L8) at the optical axis (101), and R16 is a radius of curvature of an image side surface of the eighth lens (L8) at the optical axis (101).

13. The optical system (10) according to any one of claims 1 to 12, **characterized in that**, the optical system (10) further satisfies at least one of following relationships:

$$1.4<CT1/CT2<3.5;$$

$$3<CT3/CT4<5;$$

$$4<CT5/CT4<5.5;$$

$$1.1<CT7/CT6<2.8;$$

and

$$2.2<CT7/CT8<3.7,$$

wherein, CT1 is a thickness of the first lens (L1) at the optical axis (101), CT2 is a thickness of the second lens (L2) at the optical axis (101), CT3 is a thickness of the third lens (L3) at the optical axis (101), CT4 is a thickness of the fourth lens (L4) at the optical axis (101), CT5 is a thickness of the fifth lens (L5) at the optical axis (101), CT6 is a thickness of the sixth lens (L6) at the optical axis (101), CT7 is a thickness of the seventh lens (L7) at the optical axis (101), and CT8 is a thickness of the eighth lens (L8) at the optical axis (101).

14. A camera module (20), **characterized by** comprising:

an optical system (10) according to any one of claims 1 to 13; and
a photosensitive chip (201) located on the image side of the optical system (10).

15. An electronic device (30), **characterized by** comprising:

a housing (310); and
a camera module (20) according to claim 14, wherein the camera module (20) is received in the housing (310).

FIG. 1A

| | |
|---|---|
| ———————— 650.0000 nm | ———————— 555.0000 nm T |
| — — — — 610.0000 nm | — — — — — 555.0000 nm S |
| — ·· — ·· — ·· 555.0000 nm | |
| ················· 510.0000 nm | |
| — · — · — · — 470.0000 nm | |

Longitudinal spherical aberration

Astigmatism
Image height

Distortion
Image height

Focus point (mm)

Focus point (mm)

Distortion (%)

FIG. 1B

FIG. 1C

FIG. 1D

FIG. 1E

FIG. 1F

FIG. 2A

FIG. 2B

FIG. 2C

| | |
|---|---|
| ——————— 650.0000 nm | ——————— 555.0000 nm T |
| — — — — - 610.0000 nm | — — — — — 555.0000 nm S |
| — — — — — 555.0000 nm | |
| ·············· 510.0000 nm | |
| — ·· — ·· — 470.0000 nm | |

Longitudinal spherical aberration

Astigmatism
Image height

Distortion
Image height

Focus point (mm)

Focus point (mm)

Distortion (%)

FIG. 2D

FIG. 2E

| | | |
|---|---|---|
| ———————— | 650.0000 nm | ———————— 555.0000 nm T |
| — — — — — | 610.0000 nm | — — — — 555.0000 nm S |
| — — — — | 555.0000 nm | |
| ············· | 510.0000 nm | |
| — · — · — · — | 470.0000 nm | |

Longitudinal spherical aberration

Astigmatism
Image height

Distortion
Image height

Focus point (mm)

Focus point (mm)

Distortion (%)

FIG. 2F

FIG. 3A

| | |
|---|---|
| ———————— 650.0000 nm | ———————— 555.0000 nm T |
| — — — · 610.0000 nm | — — — — 555.0000 nm S |
| — ·· — ·· — 555.0000 nm | |
| ················· 510.0000 nm | |
| — · — · — · 470.0000 nm | |

Longitudinal spherical aberration

Astigmatism
Image height

Distortion
Image height

FIG. 3B

FIG. 3C

FIG. 3D

FIG. 3E

---

| | |
|---|---|
| ———————— 650.0000 nm | ———————— 555.0000 nm T |
| — — — — 610.0000 nm | — — — — — 555.0000 nm S |
| — — — — 555.0000 nm | |
| ··············· 510.0000 nm | |
| —·— —·— 470.0000 nm | |

Longitudinal spherical aberration

Astigmatism
Image height

Distortion
Image height

Focus point (mm)

Focus point (mm)

Distortion (%)

FIG. 3F

FIG. 4A

| | |
|---|---|
| 650.0000 nm | 555.0000 nm T |
| 610.0000 nm | 555.0000 nm S |
| 555.0000 nm | |
| 510.0000 nm | |
| 470.0000 nm | |

Longitudinal spherical aberration

Astigmatism
Image height

Distortion
Image height

Focus point (mm)

Focus point (mm)

Distortion (%)

FIG. 4B

FIG. 4C

| | | |
|---|---|---|
| ――――――――― | 650.0000 nm | |
| ― ―― ―― ― | 610.0000 nm | |
| ― ―― ―― ―― | 555.0000 nm | |
| ·············· | 510.0000 nm | |
| ― · ― ― ·― | 470.0000 nm | |

| | |
|---|---|
| ――――――― | 555.0000 nm T |
| ― ― ― ― | 555.0000 nm S |

FIG. 4D

FIG. 4E

| | |
|---|---|
| ———————— 650.0000 nm | ———————— 555.0000 nm T |
| — — — — - 610.0000 nm | - - - - - - - - 555.0000 nm S |
| — — — — — 555.0000 nm | |
| - - - - - - - - - - - 510.0000 nm | |
| — - — - — - 470.0000 nm | |

Longitudinal spherical aberration

Astigmatism
Image height

Distortion
Image height

Focus point (mm)

Focus point (mm)

Distortion (%)

FIG. 4F

FIG. 5A

FIG. 5B

FIG. 5C

| | |
|---|---|
| 650.0000 nm | 555.0000 nm T |
| 610.0000 nm | 555.0000 nm S |
| 555.0000 nm | |
| 510.0000 nm | |
| 470.0000 nm | |

Longitudinal spherical aberration

Astigmatism
Image height

Distortion
Image height

Focus point (mm)

Focus point (mm)

Distortion (%)

FIG. 5D

FIG. 5E

| | |
|---|---|
| ——————— 650.0000 nm | ——————— 555.0000 nm T |
| —— · —— · 610.0000 nm | —— ·· —— ·· 555.0000 nm S |
| — — — — — 555.0000 nm | |
| ············· 510.0000 nm | |
| —· —·· —· 470.0000 nm | |

Longitudinal spherical aberration

Astigmatism
Image height

Distortion
Image height

Focus point (mm)

Focus point (mm)

Distortion (%)

FIG. 5F

FIG. 6

FIG. 7